# EUROPÄISCHE PATENTANMELDUNG

(11) **EP 4 235 318 A1**
(43) Veröffentlichungstag der Anmeldung: **30.08.2023**
(21) Anmeldenummer: 23154205.1
(22) Anmeldetag: 31.01.2023
(51) Int. Cl.: G05B 13/04, G05B 19/418

(54) **VERFAHREN ZUR PLANUNG UND/ODER STEUERUNG UND/ODER REGELUNG EINES HERSTELLUNGSPROZESSES IN EINER METALLURGISCHEN PRODUKTIONSANLAGE MIT MEHREREN AUFEINANDERFOLGENDEN PROZESSSCHRITTEN**

(30) Priorität: 24.02.2022 DE 102022201922
(71) Anmelder: SMS Group GmbH, 40237 Düsseldorf (DE)
(72) Erfinder: Grafe, Uwe, 40489 Düsseldorf (DE); Plociennik, Uwe, 40882 Ratingen (DE); Tokmakov, Kirill, 40239 Düsseldorf (DE)
(74) Vertreter: Klüppel, Walter

(57) **Zusammenfassung**

Die Erfindung betrifft ein Verfahren zur Planung und/oder Steuerung und/oder Regelung eines Herstellungsprozesses in einer metallurgischen Produktionsanlage mit mehreren aufeinanderfolgenden Prozessschritten, umfassend die Schritte:
Erstellen eines Basismodells (1) zur Abbildung des Materialverhaltens in der Metallherstellung und -verarbeitung, wobei das Basismodell (1) für Eigenschaftsbeschreibungen dieser Materialien auf die Anwendung der CALPHAD-Methode (Calculation of Phase Diagrams) zurückgreift,
Erstellen von wenigstens einem Submodell (2), welches die Informationen des erstellten Basismodells (1) erhält und weiterverarbeitet,
Erstellen von Prozessmodellen (3) für die mehreren aufeinanderfolgenden Prozessschritte des Herstellungsprozesses in der metallurgischen Produktionsanlage, wobei die erstellten Prozessmodelle (3) den Herstellungsprozess des jeweiligen Prozessschrittes auf Basis eines oder mehrerer der erstellten Submodelle (2) optimiert, und
Optimieren des Herstellungsprozesses in der metallurgischen Anlage mit den mehreren aufeinanderfolgenden Prozessschritten unter Berücksichtigung der erstellten Prozessmodelle (3) und globalen und/oder lokalen Optimierungszielen.

## Beschreibung

Die Erfindung betrifft ein Verfahren zur Planung und/oder Steuerung und/oder Regelung eines Herstellungsprozesses in einer metallurgischen Produktionsanlage mit mehreren aufeinanderfolgenden Prozessschritten. Das erfindungsgemäße Verfahren basiert auf einer Modellierung von thermodynamischen Eigenschaften, thermophysikalischen Eigenschaften und/oder davon abgeleiteten Eigenschaften von metallischen Legierungen aus dem Herstellungsprozess in der metallurgischen Anlage.

Jeder Herstellprozess hat zum Ziel, am Produkt bestimmte Eigenschaften einzustellen. Um diese Eigenschaften zu erreichen, müssen im Prozess bestimmte Prozessparameter eingestellt werden, die auch von den vorherigen Prozessen abhängen. Dies betrifft auch den Gefügezustand eines Vormaterials, der die Prozessparameter des nachfolgenden Prozesses beeinflusst (z.B. beeinflusst die Haspeltemperatur im Warmwalzwerk das Gefüge des Warmbandes, das wiederum die Austenitisierung in einer nachfolgenden Glühlinie beeinflusst).

In EP 1 289 691 B2 ist ein sehr einfacher Stand der Modellierungstechnik von Phasenumwandlungen mit empirischen Avrami-Gleichungen und Löslichkeitsprodukten beschrieben. Mit dem in EP 1 289 691 B2 genannten Ansatz des Löslichkeitsproduktes sind nur einfache stöchiometrische Ausscheidungen (enthalten nur 2 Komponenten/ Legierungselemente, wie z.B. Aluminiumnitrid AIN) berechenbar. Komplexe Ausscheidungen können mit dem Ansatz nicht berechnet werden: z.B. gemischte Karbonitride von Vanadium mit Löslichkeit für Niob und Titan (V, Nb, Ti)(C,N), die je nach C- und N-Gehalt von einem Karbid in ein Nitrid oder umgekehrt übergehen. Auch Zementit kann nicht nur aus Fe3C bestehen, sondern auch einen hohen Anteil Chrom enthalten (Fe,Cr,Mn,...)3(C). Auch eine Ausscheidung von Sigma-Phase in rostfreien Stählen ist nicht möglich. Die Modelle der Phasenumwandlung sind empirisch, deren Koeffizienten (Avrami-Modell) müssen immer an experimentelle Daten angepasst ("gefitted") werden. Sie haben wie Regressionsmodelle keine Vorhersagekraft. Löslichkeitsprodukte von Ausscheidungen wie z.B. in S. Hahn, T. Schaden: "Dynaphase: Online Calculation of Thermodynamic Properties during Continuous Casting", Berg- und Hüttenmännische Monatshefte, BHM (2014) Vol. 159 (11), S. 438-446 oder R. Hinterkörner, N. Hübner, H. Resch, K. Burgstaller, W. Felberbauer, B. Tragl, "Slab-Quality Prediction with In-Depth Metallurgical Modeling", la metallurgia italiana, 55, 9/2004 offenbart, haben nur einen sehr begrenzten Gültigkeitsbereich.

Lösungen, bei denen das Thermodynamik-Modell nicht direkt mit dem Prozessmodell gekoppelt ist und wo die berechneten thermodynamischen Daten in Tabellen oder mittels Regressionkoeffizienten abgelegt sind, erlauben es nicht oder nur eingeschränkt, die aktuell produzierte chemische Zusammensetzung zu berücksichtigen. Es ist damit auch nicht möglich, die genauen Umwandlungstemperaturen, Phasenanteile und - zusammensetzungen zu berechnen. Das ist insbesondere bei Mikrolegierungselementen von Nachteil, bei denen kleine Änderungen der Elementgehalte (insbesondere der Mikrolegierungselemente Nb, Ti, V) zu großen Änderungen des Werkstoffverhaltens führen.

Für Produkte des Austenitzerfalls bei Abkühlung (z.B. proeutektoide Ferritbildung) wird ein sehr einfacher Avrami-Ansatz verwendet, der für isotherme Umwandlungen gültig ist. Der Ansatz versagt bei einer Wiedererwärmung einer Strangoberfläche (Kernwärme bei Intensivkühlung), die zu einer Wiederauflösung des gebildeten Ferrits führt.

Diese Modelle sind nicht allgemeingültig und können nur für einen bestimmten Anwendungsfall eingesetzt werden. Das Löslichkeitsprodukt zur Berechnung der AIN-Ausscheidung aus EP 1 289 691 B2 kann nicht verwendet werden, um z.B. den Beginn der Ferritbildung vorherzusagen, obwohl bei beiden Vorgängen zuerst Keimbildung und dann Keimwachstum auftritt.

In A. Samoilov, B. Buchmayr, H. Cerjak, "A thermodynamic model for composition and chemical driving force for nucleation of complex carbonitrides in microalloyed steel", Steel Research, 65, 1994, No. 7, p. 298 wird das Hillert-Staffanson Modell (Vorläufer des Compound Energy Formalism - CEF, begrenzt auf 2 Untergitter) angewendet, um Carbonitride von Nb, Ti, V zu berechnen. Dieses Modell erlaubt aber nicht, gleichzeitig die Ausscheidung anderer Karbidtypen wie z.B. M23C6 mit mehreren Untergittern (Cr,Fe,...)20(Cr,Fe,Mo,W,...)3(C,B)6 (siehe H.L. Lukas, S.G. Fries, B. Sundman: "Computational Thermodynamics", ISBN 978-0-521-86811-2, S. 127), die mit den Karbonitriden um den Kohlenstoff konkurrieren und sich gegenseitig beeinflussen können, z.B. in X6CrNiMoTi17-12-2. Mit dem Modell ist es möglich die konkurrierenden Ausscheidungsprozesse, an all denen Kohlenstoff beteiligt ist, thermodynamisch konsistent zu modellieren und über die Berechnung der (multikomponentigen) Keimbildung und des Wachstums der Ausscheidungen die Kühlung so zu steuern, dass die Bildung dieser Phasen soweit unterdrückt wird, dass sich keine Qualitätsmängel wie Risse am Halbzeug ergeben. Das Modell von Samoilov hat zwar Untergitter, ist aber nicht in der Lage, gleichzeitig zu der Carbonitrid- die Ferrit-Ausscheidung zu modellieren, da Ferrit eine andere Beschreibung der beiden Untergitter benötigt. Zur Beschreibung von intermetallischen Phasen werden in der Regel mindestens 3 Untergitter benötigt, was auf die Sigma-Phase in hochlegierten Stählen zutrifft (siehe H.L. Lukas, S.G. Fries, B. Sundman: "Computational Thermodynamics", S. 136).

Die Veröffentlichung des Modells von Weinzierl (K. Weinzierl, K. Franz, S. Schmors, "A Novel Phase Transformation Model based on Gibbs' Free Enthalpy and the Stefan Equation improves Material Properties of Hot Rolled Products" und DE 102 51 716 83 A1) befasst sich nur mit den Phasen Austenit, Ferrit und Zementit nur in einer Warmbandkühlstrecke. In DE 102 51 716 83 A1 wird erwähnt, dass mit der Methode aus B. Sundman, J. Agren: "A regular solution model for phases with several components and sublattices, suitable for computer applications", J. Phys. Chem. Solids. Vol. 42, pp. 297-301, 1981, die auch Grundlage des CEF ist, thermodynamische Gleichgewichte für Mehrphasensysteme berechnet werden können und als Beispiel werden die Phasen Austenit, Ferrit und Zementit angegeben. Die Möglichkeit zur gekoppelten Berechnung von Ausscheidungen, welche die Rekristallisation und damit über die Korngröße auch die Austenitumwandlung und die Kühlwirkung beeinflussen, in den der Kühlstrecke vorgelagerten Walzgerüsten, wird nicht erkannt.

Ausgehend von diesem Stand der Technik liegt der Erfindung die Aufgabe zugrunde, ein Verfahren zur Planung und/oder Steuerung und/oder Regelung eines Herstellungsprozesses in einer metallurgischen Produktionsanlage mit mehreren aufeinanderfolgenden Prozessschritten durch eine Verbesserung der Phasenumwandlungsmodellierung zu optimieren, wobei mittels der Phasenumwandlungsmodellierung die Bildung komplexer chemisch zusammengesetzter Phasen vorhergesagt wird, welche von Werkstoffmodellen genutzt werden, um den Herstellungsprozess zu steuern.

Die Aufgabe wird erfindungsgemäß gelöst durch ein Verfahren zur Planung und/oder Steuerung und/oder Regelung eines Herstellungsprozesses in einer metallurgischen Produktionsanlage mit mehreren aufeinanderfolgenden Prozessschritten, umfassend die Schritte:
Erstellen eines Basismodells zur Abbildung des Materialverhaltens in der Metallherstellung und -verarbeitung, insbesondere von Metallen oder metallischen Legierungen, wobei das Basismodell für Eigenschaftsbeschreibungen dieser Materialien auf die Anwendung der CALPHAD -Methode (Calculation of Phase Diagrams) zurückgreift, wobei die CALPHAD-Methode Phasen mit mehreren Untergittern (Multiple Sublattices) modelliert und dadurch thermodynamische Eigenschaften, thermophysikalische Eigenschaften und/oder davon abgeleitete Eigenschaften von metallischen_Legierungen aus dem Herstellungsprozess in der metallurgischen Anlage beschreibt,
Erstellen von wenigstens einem Submodell, welches die Informationen des erstellten Basismodells erhält und weiterverarbeitet, wobei das Submodell Gefüge oder Werkstoffeigenschaften aus dem Herstellungsprozess in der metallurgischen Anlage beschreibt,
Erstellen von Prozessmodellen für die mehreren aufeinanderfolgenden Prozessschritte des Herstellungsprozesses in der metallurgischen Produktionsanlage, wobei die erstellten Prozessmodelle den Herstellungsprozess des jeweiligen Prozessschrittes auf Basis eines oder mehrerer der erstellten Submodelle optimiert, und
Optimieren des Herstellungsprozesses in der metallurgischen Anlage mit den mehreren aufeinanderfolgenden Prozessschritten unter Berücksichtigung der erstellten Prozessmodelle und globalen und/oder lokalen Optimierungszielen.

Eine Planung eines Herstellungsprozesses im Sinne der Erfindung betrifft eine vom tatsächlichen Herstellungsprozess unabhängige (offline) Planung, während eine Steuerung eines Herstellungsprozesses die tatsächliche Beeinflussung (online) des Herstellungsprozesses betrifft.

Die Erfindung basiert auf der Verwendung eines universell einsetzbaren thermodynamischen Basismodells und den darauf aufbauenden Submodellen zur Werkstoffsimulation in Kombination mit Prozessmodellen zur Steuerung der metallurgischen Herstellungsprozesse in einer Produktionsanlage, insbesondere der Stahlherstellung (auch anwendbar z.B. auf Ni-, Al-, Mg-, Cu-, Ti-Legierungen), zwecks Qualitätsverbesserung des Halbzeugs sowie der Optimierung der Prozessführung.

Das thermodynamische Basismodell ist die Grundlage von allen kinetischen (Sub-)Modellen zur Simulation von Phasenumwandlungen und der Berechnung thermophysikalischer Eigenschaften, die von Phasenanteilen und der chemischen Zusammensetzung von Phasen bestimmt wird: Enthalpie, Wärmekapazität, Dichte, Molvolumen, Wärmeausdehnungskoeffizient, Viskosität, Wärmeleitfähigkeit, elektrische Leitfähigkeit, magnetische Eigenschaften, Grenzflächenenergien. Das Basismodell stellt den Submodellen Daten über das thermodynamische Gleichgewicht oder von Abweichungen vom Gleichgewicht in metallischen Legierungen direkt oder in linearisierter Form zur Verfügung. Das Basismodell mit den Submodellen (Werkstoffmodelle) wird in den Prozessmodellen zur Steuerung der Prozesse verwendet, indem Regeln für die Temperaturführung und Umformung abgeleitet werden.

Das erfindungsgemäße Basismodell kann zu allen metallurgischen Vorgängen und den dafür benötigten Submodellen Daten bereitstellen, inkl. Daten für Diffusion der Legierungselemente ("thermodynamischer Faktor" als Bestandteil von Diffusionskoeffizienten neben den atomaren Mobilitäten). Erfindungsgemäß ist kein weiteres Thermodynamik-Modell erforderlich. Basierend auf den Daten nur eines einzigen thermodynamischen Basismodells können Temperaturen, Wärmeinhalte, Umformung und Gefügebildung (Sekundär-, Primärgefüge) sowie die daraus resultierenden mechanisch-technologischen Eigenschaften berechnet und somit für Prozessmodelle und deren Steuerungsaufgaben verwendet werden. Mit anderen Worten: das Thermodynamik-Modell ist Teil des Prozessmodells und damit Teil der Automatisierung und es ist in der Lage, die aktuell vorliegende chemische Zusammensetzung der Legierung zur berücksichtigen.

Das erfindungsgemäße Basismodell ist die Basis aller weiteren Werkstoffmodelle zur Beschreibung metallkundlicher Vorgänge im Verlauf von metallurgischen Prozessen und Fertigungsprozessen und basiert auf dem thermodynamischen Ansatz des Compound Energy Formalism (CEF) bzw. Multiple Sublattice Model. Das Basismodell ermöglicht eine über mehrere Prozesse durchgängige Werkstoffmodellierung mit konsistenten thermodynamischen Daten. Die Prozessmodellierung mit den dazugehörigen Werkstoffmodellen beginnt mit dem Schmelzen oder einer Schmelzebehandlung bis zur Herstellung des Halbzeugs oder sogar bis zum Endprodukt (z.B. Schmiedeteil, additiv gefertigtes Bauteil). Diese Modellierung erlaubt es, prozessstufenübergreifend Werkstoffeigenschaften als Regelgröße ("Soft-Sensor") zu definieren.

Gemäß der vorliegenden Erfindung arbeitet das thermodynamische Basismodell, welches auf dem thermodynamischen Ansatz des Compound Energy Formalism bzw. Multiple Sublattice Model basiert, gemäß der CALPHAD Methode. Das Basismodell stellt allen Modellen zur Steuerung von Prozessen in einer Prozesskette (z.B. Erstarren, Warmumformen, Kaltumformen, Wärmebehandlung, ...) bei der Herstellung von Metallen, insbesondere Stahl- und Al-, Ni-, Ti-, Cu-, Mg-Legierungen, konsistente Daten zur Verfügung. Die Konsistenz bezieht sich nicht nur auf die Verknüpfung von Phasen bzw. Phasenanteilen mit der Enthalpie oder der spezifischen Wärmekapazität (die zur Simulation von Temperaturfeldern benötigt wird), sondern auch auf die Daten von Gefügemodellen in unterschiedlichen Prozessstufen der Prozesskette oder für konkurrierende Umwandlungen in demselben Prozess.

Bei konventionellen Modellen nach Stand der Technik gibt es für jeden Zweck unterschiedliche, vereinfachte thermodynamische Modelle (z.B. Löslichkeitsprodukt, Substitutional Solution Model, Hillert-Staffansson Modell). Der Vorteil der Erfindung ist, dass nur noch ein Basis-Modell benötigt wird, und die thermodynamischen Daten für alle Submodelle konsistent sind. Beispielsweise sind die Werkstoffmodelle von Gieß- und Walzprozess nach dem Stand der Technik unabhängig voneinander, nämlich (i) zur Berechnung thermophysikalischer Eigenschaften, (ii) zur Berechnung von Ausscheidungen und deren Auflösung, (iii) Modelle zur Vorhersage des Austenitzerfalls bzw. der Austenitisierung, (iv) zur Berechnung von Umformfestigkeiten unter Berücksichtigung von Ausscheidungen, Rekristallisation, Kornwachstum, und (v) zur Berechnung der Erstarrung. Demgegenüber sind erfindungsgemäß mittels des einzigen thermodynamischen Basismodells die thermodynamischen Daten über den gesamten Herstellungsprozess konsistent. Die Berechnung von Temperaturfeld (thermophysikalische Eigenschaften) und dem Submodell für das Gussgefüge (transkristallines und globulitisches Gefüge als Funktion der konstitutionellen Unterkühlung) erfolgen erfindungsgemäß mit dem gleichen thermodynamischen Basismodell, da sonst z.B. die vom Gefügemodell benötigten Temperaturgradienten an der Erstarrungsfront falsch sind.

Das erfindungsgemäße Verfahren erzielt eine Verbesserung der Qualität des metallurgischen Produkts, insbesondere des Stahl-Produkts, durch Verbesserung des Gefüges und der mechanisch-technologischen Eigenschaften durch Vermeidung von Fehlern am Halbzeug (z.B. Rissbildung) durch thermodynamisch-kinetische Modellierung des Gefüges und der entstehenden Phasen als Funktion der Prozessparameter und der chemischen Zusammensetzung (einer Schmelze und deren Streuungen). Es ergibt sich eine wesentlich genauere Beschreibung des Werkstoffverhaltens, insbesondere über mehrere Prozessschritte hinweg. Daraus ergeben sich bessere Regelstrategien für Erschmelzen (z.B. Einstellen einer Legierungszusammensetzung, Einstellung der Gießtemperatur), Erstarrung, Wiedererwärmung (Auflösung von Ausscheidungen, Aufheizstrategien zur Vermeidung von "Hot Shortness"/Lötbruch), Warmumformung (Walzen inkl. thermomechanisches Walzen, Schmieden, usw.), Adjustage (z.B. geringere Toleranzen bei der Endabmessung des Produktes nach dem Schneiden bei höheren Temperaturen durch genauere Beschreibung der Wärmeausdehnung), Wärmebehandlung (z.B. Vergüten von Blech, Langprodukten, Schmiedeteile, usw.). Die verwendeten Thermodynamik-Daten, ermittelt nach der CALPHAD-Methode, erlauben auch die Extrapolation in höherkomponentige Legierungssysteme, die nicht direkt bei der Ermittlung der Gibbs-Energiekoeffizienten mit experimentellen Daten abgestützt sind. Das ist z.B. bei Löslichkeitsprodukten nicht der Fall.

Nach einer erfindungsgemäßen Variante beschreibt das Basismodell die thermodynamische Beschreibung von Phasen mit mehreren Untergittern in metallischen Legierungen, Schlacken, Gasen und/oder lonenkristallen mit elektrisch geladenen Bestandteilen oder ionischen Schmelzen. Das Basismodell kann wenigstens zwei Untergitter umfassen, wobei sich interstitielle Elemente und substitutionelle Elemente auf getrennten Untergittern befinden. Gemäß einer vorteilhaften Variante umfasst das Basismodell auch drei oder mehr Untergitter.

Das thermodynamische Basismodell ist gekennzeichnet durch die Verwendung mehrerer Untergitter, mit denen die Konfiguration der Atome im Kristallgitter abgebildet wird. Bei intermetallischen Phasen (z.B. Sigma in rostfreien Edelstählen) werden z.B. drei Untergitter verwendet, bei Karbiden wie M23C6 ebenfalls 3 Untergitter. Bei den Phasen Austenit (kubisch-flächenzentriert, FCC_A1 in Stahl oder Ni-Legierungen) und Ferrit (BCC_A2) werden in der Regel zwei Untergitter verwendet, eines für die substitutionellen und eines für die interstitiellen Legierungselemente. Das Untergitter der Zwischengitterplätze enthält dann noch zusätzliche Leerstellen bzw. Vacancies VA, die wie ein chemisches Element betrachtet werden:

(Fe, Mn, Ni, Cr, ...)1(C,N,B,VA)1: FCC_A1

(Fe, Mn, Ni, Cr, ...)1(C,N,B,VA)3: BCC_A2

Jede Phase mit substitutionellen Legierungselementen kann ein Untergitter für Zwischengitterplätze und interstitielle Elemente enthalten. Diese interstitiellen Untergitter enthalten dann ein "künstliches" chemisches Element VA ("vacancy"), das einen nicht mit Atomen besetzten Gitterplatz darstellt. Die Summe der Untergitteranteile ("site fractions") aller Bestandteile ("constituents": Elemente, Moleküle, Ionen, Gitterlücken) ergibt 1. Die Molanteile der Elemente/Constituents können aus den Untergitteranteilen berechnet werden. In Abhängigkeit der Phasenbeschreibung, die durch die Formeleinheit, die Untergitter und deren Bestandteile definiert wird, wird eine mathematisch-physikalische Beschreibung der Gibbs'schen freien Enthalpie (Gibbs-Energie) erstellt. Das thermodynamische System wird durch die intensiven Variablen und die extensiven Variablen definiert. Die Berechnung eines thermodynamischen Gleichgewichts des Systems bestehend aus mehreren Phasen, deren Molmenge gegeben ist, erfolgt durch Minimierung der gesamten Gibbs-Energie des Systems unter Nebenbedingungen.

In einer erfindungsgemäßen Variante beschreibt das Basismodell eine oder mehrere der folgenden thermodynamischen Eigenschaften, thermophysikalischen Eigenschaften und/oder davon abgeleiteten Eigenschaften im thermodynamischen Gleichgewicht, in metastabilen oder partiellen Gleichgewichten: chemische Potentiale, Gibbs-Energien von Phasen, Phasenzusammensetzungen, Phasenanteile, Enthalpie, Wärmekapazität, Dichte, thermischer Ausdehnungskoeffizienten, Molvolumen, Viskosität, Wärmeleitfähigkeit, elektrische Leitfähigkeit, magnetische Eigenschaften, Temperaturen von Phasenumwandlungen wie Liquidus-Temperatur oder Solidus-Temperatur, atomare Mobilitäten und Diffusionskoeffizienten und/oder Grenzflächenenergien zwischen Phasen.

Gemäß einer Variante der Erfindung umfasst das Basismodell alle für den Herstellungsprozess, insbesondere der Prozessschritte des Herstellungsprozesses, notwendigen Phasen und deren Eigenschaften, die durch, insbesondere diffusionskontrollierte, Phasenumwandlungen in Gieß-, Warmumform-, Kaltumform- und/oder Wärmebehandlungsprozessen relevant sind.

Nach einer bevorzugten erfindungsgemäßen Variante simuliert mindestens ein Submodell die Kinetik von Phasenumwandlungen und/oder berechnet thermodynamische Eigenschaften, die von Phasenanteilen und der chemischen Zusammensetzung von Phasen bestimmt werden.

In einer Variante der Erfindung beschreibt das wenigstens eine Submodell eines der folgenden Gefüge oder eine der folgenden Eigenschaften abweichend vom thermodynamischen Gleichgewicht: thermophysikalische Eigenschaften, Ausscheidung/Auflösung (intermetallischer) Phasen, Mikroseigerung/Erstarrungskinetik, Fehlstellenbildung (Heißrisse, Lunker, Poren, Leerstellen, Versetzungen), Austenitisierung, Austenitzerfall (Austenitzerfall und Austenitisierung sind Beispiele für die Umwandlung der Matrixphase, die auch in Titanlegierungen auftritt), Dendritenwachstum, martensitische Umwandlungen, Gussgefüge (Columnar-to-Equiaxed Transition inkl. Unterkühlungseffekte von Schmelzen), Ver-/ Entfestigung (Erholung, Rekristallisation), Ausgleich von Unterschieden von Konzentrationen und chemischen Potentialen (Diffusion, Wasserstoffeffusion), Fließspannung, Kornwachstum, Ausbildung kristallografischer Texturen (z.B. Goss-Textur in kornorientiertem Silizium-Stahl), mechanische Eigenschaften und/oder magnetische Eigenschaften wie z.B. die Curie-Temperatur.

Auf Basis der vorgenannten Modelle erhält man erfindungsgemäß beispielsweise folgende Ergebnisse als Resultat einer thermodynamischen Gleichgewichtsberechnung oder der Berechnung eines metastabilen Gleichgewichts (entspricht nicht dem Zustand des absoluten Minimums der Gibbs-Energie) für das thermodynamische Gesamtsystem und für jede einzelne Phase:
- Gibbs-Energie, Enthalpie, Entropie, spezifische Wärmekapazität der Phasen und des Gesamtsystems
- Phasenanteile (Phasenumwandlungstemperaturen), Molmengen der Phasen, Molmengen der Constituents/Elemente in den Phasen (Phasenanteile)
- Chemische Potentiale der Elemente (constituents)
- Chemische Zusammensetzung der Phasen (Molanteile der Elemente/Constituents) und die Zusammensetzung der Untergitter (site fractions), Partialdrücke von Komponenten in Gasgemischen
- Diffusionskoeffizienten und thermodynamische Faktoren der Diffusion
- Molvolumina (Dichte, Ausdehnungskoeffizient, Kompressibilität)
- Druck eines Systems mit gasförmigen Phasen
- chemisch treibende Kraft für die Ausscheidung einer Phase ("driving force for precipitation of a new phase")
- Stapelfehlerenergie einer Phase (z.B. face-centered-cubic/hexagonal-closedpacked bzw. FCC_A1/HCP_A3)
- Latente Wärmen bei Phasenumwandlungen
- magnetische Beiträge (z.B. Curie-Temperatur, Volumenänderung bei magnetischer Umwandlung)

Direkt von diesen thermodynamischen Daten können folgende Daten als Funktion der Phasenanteile und Phasenzusammensetzung abgeleitet werden:
- Viskosität von Schmelzen
- Wärmeleitfähigkeit
- elektrische Leitfähigkeit
- Grenzflächenenergien zwischen Phasen

Außerdem werden partielle thermodynamische Gleichgewichte unter bestimmten Nebenbedingungen formuliert und berechnet, wie z.B. das Para-Equilibrium in Stahl (PEQ) von Ferrit, Austenit, Zementit in Stahl: Dabei werden die substitutionellen Elemente, die das Hauptelement (z.B. Fe in Stahl, C auf interstitiellem (Zwischen-)Gitterplatz) auf seinem Gitterplatz ersetzen können, als ortsfest angenommen und zu einem virtuellen chemischen Element Z zusammengefasst.

Eine spezielle Form der Gleichgewichtsberechnung unter Nebenbedingungen - und zwar die Bedingung, dass die Konzentration einer Produktphase nach der Umwandlung von der Matrixphase übernommen wird. Ein solche partitionslose Umwandlung ist ab der sogenannten T0-Temperatur möglich, ab der die Gibbs-Energien der beteiligten Phasen bei unveränderter Konzentration gleich sind, siehe auch M. Hillert: "Phase Equilibria, Phase Diagrams and Phase Transformations, Their Thermodynamic Basis", Cambridge University Press, ISBN 978-0-521-85351-4, PEQ: S. 311.

In einer bevorzugten Variante der Erfindung erfolgt ein Datenaustausch zwischen dem Basismodell, den mehreren Submodellen und/oder den mehreren Prozessmodellen. Die genannten Modelle kommunizieren also untereinander, um den Herstellungsprozess in der metallurgischen Produktionsanlage mit mehreren aufeinanderfolgenden Prozessschritten zu optimieren.

Gemäß einer erfindungsgemäßen Variante bestimmen ein oder mehrere Prozessmodelle zur Optimierung eines zugeordneten Prozessschrittes des Herstellungsprozesses jeweils Regelgrößen und/oder Stellgrößen für die Automation des Herstellungsprozesses.

Nach einer Variante der Erfindung sind die Regelgrößen ausgewählt aus: Viskosität der Schmelze, Phasenanteil, insbesondere Festphasenanteil und Schmelzeanteil, Daten zu Ausscheidungen, insbesondere deren Typ, Volumenanteil, mittlere Größe und/oder Verteilungsfunktion der Größe der Ausscheidungen, mittlere Korngrößen und/oder Verteilungsfunktion der Korngrößen, Gefügemengenanteile (z.B. Bainit, Perlit), Versetzungsdichte, mechanische Eigenschaften, Umformvermögen, Umformfestigkeit, Cottrell-Wolken, Homogenisierungsgrad, Zener-Pinning-Force (Zener-Kraft, G. Gottstein: "Materialwissenschaft und Werkstofftechnik, Physikalische Grundlagen", Springer, ISBN 978-3-642-36602-4, S. 356), Überhitzung der Schmelze bei Gießstart bis Gießende, Position der Durcherstarrung, Strangschalendicke, Strangoberflächentemperaturen, Position der vorgegebenen Phasenteile, Ziehtemperatur, Auflösung der Ausscheidungen, Verteilung der Austenitkorngröße, Abmessungen und Geometrie von Halbzeug/Endprodukt (z.B. additiv gefertigt, geschmiedet, ...), Endwalztemperatur, Gefüge vor der Umformung, Ziehtemperatur aus dem Wiedererwärmungsprozess, Massenstrom, Walzgeschwindigkeit, Wassermengen einer Zwischengerüstkühlung und/oder Haspeltemperatur.

In einer erfindungsgemäßen Variante betreffen die Stellgrößen Prozessparameter wie Temperatur, Zeit, Geschwindigkeit, Druck, Kraft, Volumenströme, Geometrie und dergleichen und sind insbesondere ausgesucht aus: Abstichtemperatur der Schmelze, Heizleistung, Masse Kühlschrott, Spüldauer, Gießgeschwindigkeit, Wassermengen und Luftdruck der Sekundärkühlung, Temperatur und Verweilzeit in Heiz- oder Kühlzonen, Einsatztemperatur und/oder Umformgrad.

Gemäß einer bevorzugten Variante der Erfindung sind die mehreren aufeinanderfolgenden Prozessschritte des Herstellungsprozesses ausgewählt aus einer Gruppe von Merkmalen gebildet aus: Schmelzen und Legieren, Blockgießen, Stranggießen, Adjustage (Brammen, Bleche, Langprodukte, Ringe), Wiedererwärmung, Warmwalzen, Kaltwalzen, Wärmebehandlung, Oberflächenbeschichtung, Oberflächenhärten, Strangpressen, Schmieden, Transport, Rohrherstellung, Beschichten in Bandbehandlung und/oder additive Fertigung.

Nach einer zweckmäßigen Variante der Erfindung betreffen die globalen Optimierungsziele den gesamten Herstellungsprozess in der metallurgischen Produktionsanlage.

In einer erfindungsgemäßen Variante betreffen die lokalen Optimierungsziele einen oder mehrere der Prozessschritte des Herstellungsprozesses in der metallurgischen Produktionsanlage.

Gemäß einer vorteilhaften erfindungsgemäßen Variante sind die Optimierungsziele ausgewählt aus einer Gruppe von Merkmalen gebildet aus: Produktqualität, Produktfehler, chemische Produktzusammensetzung, Energieverbrauch, Produktionsrate, Maschinenauslastung, Maschinenabnutzung und/oder Produktionszeit.

Nach einer Variante der Erfindung werden mehrere Submodelle erstellt, welche jeweils die Informationen des erstellten Basismodells erhalten und weiterverarbeiten, wobei jedes Submodell Gefüge- oder Werkstoffeigenschaften aus dem Herstellungsprozess in der metallurgischen Anlage beschreibt.

In einer erfindungsgemäßen Variante stellt das Prozessmodell Informationen zur Temperaturführung, zum Massenfluss und/oder zur Umformung bereit, um den Herstellungsprozess zu optimieren.

Gemäß einer vorteilhaften Variante der Erfindung werden dem Basismodell zusätzlich zu der chemischen Zusammensetzung und der Temperatur auch Berechnungsergebnisse der Submodelle und der Prozessmodelle übergeben, so dass die Ergebnisse des Basismodells präzisiert und wieder an die Submodelle übergeben werden, um eine iterative Berechnung auszuführen.

Nach einer zweckmäßigen erfindungsgemäßen Variante umfasst das Basismodell zwei oder mehr Untergitter, wobei ein Untergitter die interstitiellen Bestandteile ("constituents", z.B. chemische Elemente) mit Gitterlücken ("Vacancies") und das andere Untergitter die substitionell gelösten Bestandteile enthält.

Die Prozessteuerung erfolgt insbesondere auf einer oder auf einer Kombination der folgenden Materialeigenschaften an einem definierten Punkt im Produkt, Prozess bzw. in der Anlage:
- Bildung und Auflösen von Phasen und Ausscheidungen
- Phasenanteile
- Gefügeanteile
- Korngröße
- Ausgleich von Konzentrationsunterschieden
- Entstehung von Fehlstellen (Lunker, Poren im Walzgut, Versetzungsdichte)
- ... usw.

Solche Materialeigenschaften oder Gefügebestandteile als Regelgröße sind z.B.:
- Viskosität einer Schmelze während des Gießens
- Festphasenanteil ("fraction solid") beim Auslauf aus der Gießmaschine
- Festphasenanteil bei Soft- und Hard-Reduction
- Ausscheidungszustand von Phasen in Bereichen mit mechanischer Belastung
- Primärgefüge (Anteile an globulitischen und transkristallinen Körnern)
- Sekundärgefüge Eisenwerkstoffe (Anteile Austenit, Ferrit, Perlit, Bainit, Martensit, Zementit, Graphit)
- Korngröße
- Versetzungsdichte
- rekristallisierter und erholter Anteil ("recovery") bzw. entfestigter Anteil ("softening fraction")
- Umformfestigkeit bzw. Fließspannung (wahre Spannung)
- Konzentrationsunterschiede bzw. Homogensierungsgrad (z.B. Seigerungen)
- Ferromagnetismus (Stahl: Anteile an kubisch raumzentrierten Phasen)

Nachfolgend wird die Erfindung anhand von Ausführungsbeispielen näher erläutert.

### Werkstoffmodelle

Für die Berechnung der Materialeigenschaften oder Gefügebestandteile sind Werkstoffmodelle erforderlich. Alle diese Werkstoffmodelle benötigen thermodynamische Werkstoffdaten, die alle mit dem thermodynamischen Basismodell als Funktion der chemischen Zusammensetzung, Temperatur und Druck berechnet werden. Alle Werkstoff- und Gefügemodelle sind also mit dem thermodynamischen Basismodell gekoppelt.

| **Werkstoffmodell für Materialeigenschaft, Gefüge** | **Art der thermodynamischen Gleichgewichtsdaten** | **Modellergebnis (sog. Soft-Sensoren)** |
|---|---|---|
| Schmelze/Schlacke/Gasphase | Phasenanteile, Phasenzusammensetzungen, Partialdrücke | Phasenanteile, chemische Zusammensetzungen, Partialdrücke, Liquidus- und Solidustemperatur |
| Viskosität der Schmelze | Phasenanteile, Phasenzusammensetzungen | Viskosität der Schmelze |
| Festphasenanteil ("fraction solid") | Phasenanteile, Phasenzusammensetzungen, chemische Potentiale, thermodynamische Faktoren, Diffusionskoeffizienten, Molvolumen, Grenzflächenenergien | Phasenanteile, Seigerungsprofile, Enthalpie, latente Wärme |
| Ausscheidungszustand (+Zustand Matrixphase) | Phasenanteile, Phasenzusammensetzungen, | Verteilungsfunktion der Ausscheidungsgröße, |
| | chemische Potentiale, thermodynamische Faktoren, Diffusionskoeffizienten, Molvolumen | Phasenzusammensetzungen Matrix+Ausscheidungen |
| Primärgefüge | Phasendiagramm (Liquidussteigung, Element-Verteilungskoeffizienten), thermodynamische Faktoren, Diffusionskoeffizienten, Molvolumen, latente Wärme | Volumenanteil globulitisches Gefüge, Unterkühlung der Erstarrungsfront, primärer und sekundärer Dendritenarmabstand |
| Sekundärgefüge | Phasenanteile, Phasenzusammensetzungen, chemische Potentiale, thermodynamische Faktoren, Diffusionskoeffizienten, Molvolumen bei der Austenitumwandlung (Bildung und Auflösung von Austenit, Ferrit, Perlit, Bainit, Martensit) | Umwandlungstemperaturen (auch abhängig vom Umformgrad), Phasen- und Gefügemengenanteile |
| Heißrisse | Phasenanteile, Phasenzusammensetzungen, Dichte von Schmelze und Festphasen, Mikroseigerung | Brittle Temperature Range (BTR), Zero Ductility Temperature (ZDT), Zero Strength Temperature (ZST), Liquid Impenetrable Temperature (LIT), thermische Kontraktion |
| Umformfestigkeit inkl. Ver- & Entfestigung (Rekristallisation, Erholung), mechanische Eigenschaften vom Endprodukt (Streckgrenze, | Ausscheidungszustand, Diffusionskoeffizienten, Phasenanteile, Phasenzusammensetzungen, Phasenumwandlungs- | Versetzungsdichte, Zener Pinning Force, Solute Drag Force, entfestigter Anteil (rekristallisierter und erholter Anteil), |
| Bruchdehnung, Zähigkeit) | temperatur (auch als Funktion des Umformgrades) | rekristallisierte Korngröße, Umwandlungstemperatur (z.B. Ae3 bei Stahl) |
| Kornwachstum | Ausscheidungszustand (Zener Pinning Force), Diffusionskoeffizienten, Phasenanteile, Phasenzusammensetzungen, Solute Drag | Korngrößenverteilung (inkl. Mittelwert, Varianz), Textur |
| Diffusiver Ausgleich (Gradienten Konzentration, chemische Potentiale) | Ausscheidungszustand (Matrix mit dispergierter Phase), Diffusionskoeffizienten, Phasenanteile, Phasenzusammensetzungen | Konzentrationsfeld, Konzentration Element, Phasenzustand, Homogenisierungsgrad (inkl. Randentkohlung, Aufkohlung) |
| Zunder (Verzunderung / Oxidation) | Phasenanteile, Phasenzusammensetzungen, chemische Potentiale, thermodynamische Faktoren, Diffusionskoeffizienten | Zunderschichtdicke und - Zusammensetzung |

Die mechanischen Eigenschaften vom Endprodukt sind abhängig von Mischkristall- und Kaltverfestigung, sowie von Ausscheidungs- und Feinkornhärtung. Das Werkstoffmodell zur Berechnung dieser Mechanismen der Festigkeitssteigerung benötigt wiederum Informationen der Submodelle und damit vom thermodynamischen Basismodell.

### Prozessmodelle, Submodelle und Regelgrößen

Die Prozessmodelle werden zur Simulation des Prozesses und zur Steuerung bzw. Regelung der Materialeigenschaften benötigt. Als Stellgrößen zum Erreichen der gewünschten Materialeigenschaften und der Produktgeometrie stehen Prozessparameter wie Temperatur, Zeit, Geschwindigkeit, Druck, Kraft, Volumenströme zur Verfügung. Diese Prozessmodelle benötigen auch thermodynamische Daten, die von der Materialeigenschaft bzw. vom Gefüge abhängig sind und von den Werkstoffmodellen zur Verfügung gestellt werden.

| | | |
|---|---|---|
| Prozessmodell | Werkstoff- bzw. Gefügemodell | Regelgröße |
| Schmelzen | thermophysikalische Eigenschaften | Viskosität und Temperatur Schmelze |
| Schmelzebehandlung | thermophysikalische Eigenschaften, Legierungsmodell | Chemische Zusammensetzung Schmelze und Schlacke, Temperatur |
| Stranggießen | Mikroseigerung, Diffusiver Ausgleich, Ausscheidungszustand, Heißrissbildung, Sekundärgefüge, Kornwachstum, Zunder | Phasenanteil+Größenverteilung Ausscheidungen, Korngrößen, Gefügemengenanteile Ferrit, Austenit, Bainit, Perlit, Martensit, Zementit, Viskosität Schmelze |
| Kühlen Gussprodukt (Brammen, Vorblock, Knüppel, Rund, Platinen, Block aus Blockguss) | Ausscheidungszustand, Diffusiver Ausgleich, Sekundärgefüge, Kornwachstum, Zunder, Wärmeausdehnungskoeffizient | Phasenanteil + Größenverteilung Ausscheidungen, Korngrößen, Gefügemengenanteile Ferrit, Austenit, Bainit, Perlit, Martensit, Produktabmessung (z.B. Kaltdicke) |
| Wiedererwärmung (einschließlich: induktiv, konduktiv) | Diffusiver Ausgleich, Ausscheidungszustand, Sekundärgefüge, Kornwachstum, Zunder, Curie-Temperatur | Phasenanteil + Größenverteilung Ausscheidungen, Korngrößen, Gefügemengenanteile Ferrit, Austenit, Bainit, Perlit, Martensit |
| Warmumformen (Walzen, Schmieden, | Ausscheidungszustand, Sekundärgefüge, | Phasenanteil + Größenverteilung |
| Strangpressen) | Kornwachstum, Umformfestigkeit &Entfestigung, Zunder | Ausscheidungen, Korngrößen, Gefügemengenanteile Ferrit, Austenit, Bainit, Perlit, Martensit, Versetzungsdichte, mechanische Eigenschaften, Produktabmessung (z.B. Kaltdicke) |
| Kühlen nach Warmumformen (Zwischengerüstkühlung, Wasserkühlstrecke, Haspel, Blechstapel, verzögerte Kühlung in Hauben/Gruben, Drahtkühlung mit Luft) | Sekundärgefüge, Ausscheidungszustand, Kornwachstum, Umformfestigkeit & Entfestigung, Zunder | Phasenanteil + Größenverteilung Ausscheidungen, Korngrößen, Gefügemengenanteile Ferrit, Austenit, Bainit, Perlit, Martensit, Versetzungsdichte, mechanische Eigenschaften, Produktabmessung (z.B. Kaltdicke) |
| Kaltumformung | Umformfestigkeit, Ausscheidungszustand, Sekundärgefüge | Versetzungsdichte, Umformvermögen, Cottrell-Wolken (C, N) |
| Wärmebehandlung (Bänder, Bleche, Coils, Langprodukte, Schmiedeteile, Strangpressprofile und Stückgut) | Sekundärgefüge, Ausscheidungszustand, Kornwachstum, Umformfestigkeit &Entfestigung, Zunder, diffusiver Ausgleich | Phasenanteil + Größenverteilung Ausscheidungen, Korngrößen, Gefügemengenanteile Ferrit, Austenit, Bainit, Perlit, Martensit, Versetzungsdichte, Homogenisierungsgrad, mechanische Eigenschaften, Produktabmessung (z.B. Kaltdicke) |
| Oberflächenbehandlung (z.B. Feuerverzinken, Blankglühen von | Zunder/Oxidation, Diffusiver Ausgleich | Phasenanteil + Größenverteilung Ausscheidungen, Korngrößen, |
| rostfreiem Edelstahl mit Wasserstoff), chemische Oberflächenbehandlung (Aufkohlen, Carbonitrieren, Nitrieren, Borieren) | | Gefügemengenanteile Ferrit, Austenit, Bainit, Perlit, Martensit, Versetzungsdichte, Homogenisierungsgrad, mechanische Eigenschaften |

### Prozessketten (Beispiele)

Folgende Prozessketten für Stähle und Nichteisenmetalle beginnen alle mit den Schritten Schmelzen + Gießen + Kühlen Gussprodukt - Wiedererwärmen - Warmumformung - Kühlen nach Warmumformung:
CSP (Compact Strip Production)
Stahl, Konventionell Grobblech: + Vergüten
Stahl, Konventionell Warmband: + Rohrschweißen (API)
Stahl, Konventionell Warmband: + Kaltband + Bandbehandlung (WB) + Dressieren
Stahl, Konventionell Warmband: + Kaltband + Haubenglühen
Langprodukte Träger, Stabstahl, Draht, Rohre (nahtlos), Schmiedeteile: + Wärmebehandlung
Aluminium: Barren-Strangguss/Blockguss - Wiedererwärmen - Warmwalzen - Bandbehandlung (Schwebebandofen: Homogenisierung und Abschrecken)
Twin-Roll Casting + Warmumformung (Warmwalzen)

### Beispiele für die Anwendung der Werkstoffmodelle in den Prozessketten und deren Regelgrößen

Basierend auf dem thermodynamischen Basismodell werden die Daten allen Prozessmodellen und den Werkstoffmodellen der Prozessketten zur Verfügung gestellt. Des Weiteren werden alle berechneten Werkstoffdaten als "Soft-Sensoren" (Soft-, Smart- oder Virtuell-Sensor: der berechnete Werkstoffkennwert wird wie ein Messwert behandelt) der Automatisierung bzw. der Adaption zur Verfügung gestellt, so dass die Daten auch mit "Machine Learning" Methoden nutzbar sind. Das wären beispielsweise bei den Prozessen:

### Schmelzen und Legieren:

Einstellen der Legierungszusammensetzung der Schmelze:
   - Legierungszusammensetzung
      ∘ Mit Hilfe des Basismodells wird die chemische Zusammensetzung der Schmelze, die durch die Zugabe von Legierungsmittel und durch Übergang von Legierungsmitteln in die Schlacke beeinflusst wird, berechnet.
      ∘ Beim Legieren der Schmelze findet in der Regel eine chemische Reaktion (endotherm oder exotherm) oder eine Änderung des Phasenzustandes statt, die zu einer Temperaturänderung führt. Zur Berechnung dieser Temperaturänderung liefert das Basismodell die thermodynamischen Daten.
Einstellen der Schmelze für das Gießen:
   - Viskosität Schmelze
      ∘ Das Ziel ist, ein Optimum zwischen Vergießbarkeit, Innenqualität (Mittenseigerungen, Primärgefüge) und Energieeinsparung zu finden. Ein wichtiges Kriterium ist die Sicherheit des Gießprozesses: ist z.B. die Schmelze zu heiß, besteht Durchbruchgefahr; ist die Schmelze zu kalt, kann die Erstarrung oberhalb der Kokille einsetzen. Üblicherweise wird als Regelgröße die Temperatur verwendet. Eine Verbesserung kann erreicht werden durch zusätzliche Nutzung der Viskosität, insbesondere beim Gießen mit geringer Überhitzung.

### Stranggießen:

Bestimmung folgender Parameter als Regelgröße:
   - Festphasenanteil / Schmelzeanteil und davon abgeleitete Temperaturen wie Nullzähigkeit (ZDT, Zero-Ductility-Temperature), Nullfestigkeit (ZST, Zero-Strength-Temperature), Null-Nachspeisung (LIT, Liquid-Impenetrable-Temperature)
      ∘ Einstellung der Position der Durcherstarrung oder der Positionen von ZDT, ZST, LIT in der Stranggießanlage sowie der Position der Soft-Reduction und der Hard-Reduction.
   - Zener-Pinning-Force (berechnet als Funktion von Volumenanteil und Größe von Ausscheidungen)
      ∘ Minimierung von Oberflächenrissen (Duktilitätsminimum) in Bereichen der Anlage mit mechanischer Belastung der Strangschale (Biegen, Richten, Ausbauchung durch metallostatische Last).
   - Phasenanteil Ferrit
      ∘ Minimierung von Oberflächenrissen (Duktilitätsminimum) in Bereichen der Anlage mit mechanischer Belastung der Strangschale (Biegen, Richten, Ausbauchung durch metallostatische Last) und zur Austenit-Kornfeinung zwecks Vermeidung von Lötbruch/Hot-Shortness (Lötbruch-auslösende Elemente wie Kupfer verteilen sich auf eine größere spezifische Korngrenzfläche pro Volumeneinheit, was zu einer geringeren Risstiefe führt)..
   - Martensit-Start Temperatur und -Anteil
      ∘ Minimierung von Oberflächenrissen, besonders bei Kühlkonzepten (mit vergleichsweise hohen Wassermengen, die zu deutlicher Absenkung der Oberflächentemperatur nahe der Martensit-Starttemperatur führen können: a) thermische Soft-Reduction zur Reduktion der Mittenseigerung, und b) zur Austenit-Kornfeinung durch Ferritbildung und Rückumwandlung zu Austenit zwecks Vermeidung von Lötbruch/Hot-Shortness.
      ∘ Vermeidung von Martensit im Kern von Brammen, z.B. in Rohrstählen, durch Reduktion der Mittenseigerung durch Soft-Reduction
   - Anteil an globulitischem Primärgefüge (equiaxed)
      ∘ Maximierung des Equiaxed-Volumenanteils im Brammenquerschnitt zur Reduktion der Mittenseigerung
      ∘ Maximierung des Equiaxed-Volumenanteils zur Reduktion der Innenrissgefahr (z.B. bei Soft-Reduction)
      ∘ Maximierung des Equiaxed-Volumenanteils zur Verminderung der Zugrilligkeit (Ridging, Roping) bei ferritischen rostfreien Edelstählen.
   - Kritische Dehnung oder Dehnrate für Innen- oder Heißrissbildung (mit der Hilfe eines "Hot-Tearing" Modells, z.B. Y.-M. Won et al.: "A New Criterion for Internal Crack Formation in Continuously Cast Steels", Met. Trans. B, Vol. 31B, (2000), S. 779)
      ∘ Innenrissbildung bei transkristallinem (columnar) Primärgefüge.

### Transport zwischen Gießen und Wiedererwärmung:

Bestimmung folgender Parameter als Regelgröße:
- Zener-Pinning-Force (berechnet als Funktion von Volumenanteil und Größe von Ausscheidungen) zur Minimierung von Oberflächenrissen (Duktilitätsminimum) in Bereichen der Anlage mit mechanischer Belastung des Gussteils.
- Phasenanteil Ferrit
   ∘ Minimierung von Oberflächenrissen (Duktilitätsminimum) in Bereichen der Anlage mit mechanischer Belastung des Gussteils.
   ∘ Minimierung innerer Spannungen an Korngrenzen aufgrund von dort startenden Umwandlungen in Phasen mit unterschiedlicher Dichte.
- Martensit-Anteil (Starttemperatur)
   ∘ zur Minimierung von Oberflächenrissen (Kaltrisse)
   ∘ Vermeidung von Martensit-Bildung im Kern von Gussstücken durch eine verzögerte Abkühlung
- Wasserstoffkonzentration zur Vermeidung von Flockenrissen (verzögerter Bruch), z.B. beim Stapeln von Brammen (später in der Produktion auch gültig für Bleche)

### Wiedererwärmung:

Bestimmung folgender Parameter als Regelgröße:
- Phasenanteile Austenit und Ferrit:
   ∘ Die nachfolgende Warmumformung von Stahl soll im Gebiet des Austenits stattfinden.
   ∘ Bei kornorientiertem Siliziumstahl wird im Temperaturbereich, in dem neben Ferrit auch Austenit beim Aufheizen stabil wird, wiedererwärmt. Bei der Anwesenheit von Austenit gehen Steuerphasen (Ausscheidungen zur Steuerung des Kornwachstums und zur Ausbildung der Goss-Textur) besser in Lösung, da die Löslichkeit im Austenit höher ist.
- Phasenanteile Ausscheidungen:
   ∘ Bei kornorientiertem Siliziumstahl sollen die Steuerphasen (d.h. die Elemente Mn, S, AI, N, ... der Steuerphasen MnS, CuS, AIN, ...) zur Einstellung der Goss-Textur möglichst vollständig in Lösung gebracht werden.
   ∘ Vollständige Auflösung von Ausscheidungen der Mikrolegierungselemente vor dem thermomechanischen Walzen.
   ∘ Auflösung von Ausscheidungen bei Schmiedeteilen und Strangpressprofilen (z.B. aushärtbare Aluminium-Legierungen)
- Zener-Pinning-Force (ZPF) zur Steuerung des Kornwachstums:
   ∘ Vermeidung von unvollständiger bzw. einer Teil-Auflösung von Ausscheidungen der Mikrolegierungselemente (Ti, V und insbes. Nb), die zu abnormalem Kornwachstum führt und damit zu inhomogener Korngröße, was die Zähigkeitseigenschaften verschlechtert (DWTT bei Rohrstählen). Dies geschieht, wenn die treibende Kraft des Kornwachstums ungefähr gleich der ZPF ist.
   ∘ Einstellung einer ZPF, die größer ist als die treibende Kraft des Kornwachstums ist und zu einer Hemmung von Kornwachstum führt, z.B. durch Zulegieren von Ti oder Nb in mikrolegierten Stählen.
- Korngröße (statistische Parameter der Korngrößenverteilung)
   ∘ Die Korngrößenverteilung beeinflusst die mechanischen Eigenschaften des Endproduktes (z.B. DWTT bei Rohrstählen).
   ∘ Ein feineres Korn an der Oberfläche reduziert die Risstiefe bei Hot-Shortness von Stählen mit erhöhtem Cu-Gehalt.
- Umformfestigkeit
   ∘ Einstellung einer niedrigen Umformfestigkeit bei gleichzeitiger Reduktion der Prozesstemperaturen zur Einsparung von Energie, Reduktion der Zunderbildung, Verkürzung der Aufheizzeiten bzw. Erhöhung des Durchsatzes. Eine niedrige Umformfestigkeit für zu einer geringeren Anlagenbelastung und Verschleiß.
- Homogenisierungsgrad bzw. Verteilung der Legierungselemente im Werkstoffvolumen
   ∘ Ausgleich von Seigerungen.

### Warmumformung:

Bestimmung folgender Parameter als Regelgröße:
- Phasenanteile Austenit und Ferrit:
   ∘ Beim Warmwalzen (Band) von ferritischen Stählen (z.B. weiche Stähle zum Kaltumformen) muss zur Vermeidung von Grobkorn, insbesondere nahe der Oberfläche und in Kantennähe bei Warmband, vermieden werden, dass Ferrit entsteht.
   ∘ Warmwalzen (Blech, Band): Angestrebt wird ein im Querschnitt und über die Länge homogener Phasenzustand. Ein inhomogener Zustand führt zu lokal unterschiedlichen physikalischen Eigenschaften. Beispielsweise führen ungleichmäßige Festigkeiten über die Breite bzw. den Querschnitt zu inhomogener Umformung und damit zu Unplanheit, z.B. zu Randwellen (siehe L. Meyer: "Optimierung der Werkstoffeigenschaften bei der Herstellung von Warmband und Kaltband aus Stahl", ISBN 3-514-00403-X, S. 23).
   ∘ Warmwalzen (Blech, Band): Angestrebt wird ein im Querschnitt und über Länge homogener Phasenzustand, um Schopfverluste zu minimieren.
   ∘ Warmwalzen, thermomechanische Behandlung (TMB) mikrolegierter Stähle: Die TMB hat zum Ziel, ein möglichst feines Korn nach dem Austenitzerfall einzustellen. Diese kann dadurch erzeugt werden, dass die Rekristallisation des Austenits und der Austenitzerfall praktisch gleichzeitig ablaufen. Dazu sollte der letzte Umformschritt möglichst nahe der Temperatur stattfinden, bei der sich ein geringer Anteil an Ferrit (<5%) gebildet hat.
- Phasenanteil Martensit
   ∘ Beim Warmwalzen von umwandlungsträgen Stählen muss vermieden werden, dass die Zwischengerüstkühlung so intensiv ist, dass die Martensit-Starttemperatur unterschritten wird und Abschreckhärtung auftritt.
   ∘ Vermeidung von Martensit im Kern von Brammen, z.B. in Rohrstählen
- Solidustemperatur / Phasenanteil Schmelze
   ∘ Walzen von Langprodukten: Durch hohe Umformgeschwindigkeiten kann die entstehende Umformwärme nicht abgeführt werden, so dass Volumina im Produkt anschmelzen könnten.
- Zener-Pinning-Force (Phasenanteile und Größenverteilung) Ausscheidungen
   ∘ Warmwalzen, thermomechanische Behandlung (TMB) mikrolegierter Stähle: Ausscheidungen beeinflussen die Rekristallisationskinetik und üben eine rücktreibende Kraft auf Korngrenzen aus.
- Konzentration Element in Phase / chemische Zusammensetzung Phase:
   ∘ Warmwalzen, thermomechanische Behandlung (TMB) mikrolegierter Stähle: Die in Austenit gelösten Mikrolegierungselemente (insbesondere Nb) haben einen rekristallisationsverzögernden Effekt. Dazu muss ein Mindestgehalt gelöst bzw. nicht ausgeschieden sein.
- Korngrößenverteilung
   ∘ Im Anschluss an die Rekristallisation findet Kornwachstum statt, was über die Temperatur und den Ausscheidungszustand beeinflusst werden kann.
- Umformfestigkeit:
   ∘ Alle Warmumformverfahren: Die Umformfestigkeit ist z.B. abhängig vom Phasenzustand und der Versetzungsdichte und muss bekannt sein zur Berechnung der notwendigen Umformkräfte.
- Rekristallisierter bzw. entfestigter Anteil
   ∘ Warmwalzen, thermomechanische Behandlung (TMB) mikrolegierter Stähle: Die TMB hat zum Ziel, ein möglichst feines Korn nach dem Austenitzerfall einzustellen. Dies kann erreicht werden, wenn die mehrstufige Umformung so aufgeteilt wird, dass im letzten Stich dynamische Rekristallisation stattfindet.

### Abkühlen nach der Warmumformung:

Bestimmung folgender Parameter als Regelgröße:
- Phasenanteile und Größenverteilung Ausscheidungen:
   Beim Warmwalzen von ausscheidungshärtenden Stählen (z.B. mikrolegierte Rohrstähle) soll im Warmbandcoil über die Wahl der Haspeltemperatur Ausscheidungshärtung erfolgen, um die erforderliche Streckgrenze einzustellen. Bei Stählen zur Kaltumformung, die im haubenofengeglühten Zustand (weich, Textur mit guten Tiefzieheigenschaften) verkauft werden, muss die Aluminiumnitrid-Ausscheidung im Warmbandcoil vermieden werden.
- Korngröße
   ∘ Die Korngröße beeinflusst die Streckgrenze (Feinkornhärtung, Hall-Petch Beziehung, siehe Buchzitat oben: G. Gottstein, ...)
- Martensit-Anteil
   ∘ Quench & Self Tempering von Blech, Draht und Stabstahl: Gezielte Umwandlung der Oberfläche in Martensit, der durch die Kernwärme angelassen wird.
   ∘ Schienenkopfhärtung: Das Ziel ist die Einstellung eines möglichst feinstreifigen perlitischen Gefüges, welches eine hohe Verschleißbeständigkeit aufweist. Martensit und Bainit sind zu vermeiden.
- Sekundärzementit-Anteil
   ∘ Minimierung von (versprödenden, harten) Karbidnetzwerken in übereutektoiden Stählen, die ansonsten durch eine nachfolgende Wärmebehandlung (Weichglühen, GKZ-Glühen = Glühen auf kugeligen Zementit) aufgelöst werden müssen.
- Mechanische Eigenschaften (z.B. Streckgrenze)
   ∘ Die mechanischen Eigenschaften sind abhängig von den metallkundlichen Härtungsmechanismen (Feinkornhärtung, Ausscheidungshärtung, Kaltverfestigung durch Versetzungen, Mischkristallhärtung). Das Basismodell stellt die thermodynamischen Daten zur Verfügung, die notwendig sind, diese Härtungsmechanismen zu berechnen.

### Wärmebehandlung:

Ähnliche Parameter als Regelgröße können auch für die Wärmebehandlung und die Oberflächenbeschichtung von Blechen, Bändern und Langprodukten definiert werden, da auch dort die oben aufgeführten metallkundlichen Härtungsmechanismen ablaufen und damit auch die Methoden zur Einstellung von mechanischen Eigenschaften (Streckgrenze, Zugfestigkeit, Bruchdehnung, Kerbschlagarbeit, Brucheinschnürung, r-Wert, Härte) anwendbar sind.

Bestimmung folgender Parameter als Regelgröße:
• Ausscheidungszustand (Volumenanteil, Verteilungsfunktion der Größe, Zener-Pinning Force)
   ∘ Bei der Wärmebehandlung von kornorientierten Siliziumstählen wird mit der Hilfe von sogenannten Steuerphasen (Ausscheidungen, z.B. AIN, MnS, ...) abnormales Kornwachstum und damit die Goss-Textur eingestellt. Dieses wiederum bedingt, dass die ferritischen Körner die Goss-Textur aufweisen. Diese führt dazu, dass die Ummagnetisierungsverluste beim Einsatz in Transformatoren minimiert werden.
   ∘ Wärmebehandlung von Blech: Gezielte Steuerung der Kühlung derart, dass die Ausscheidung von Phasen (z.B. Karbide) minimiert wird oder gleichmäßig über die Dicke bzw. den Querschnitt stattfindet zwecks Einstellung homogener Bedingungen zur Bildung von Martensit.
• Martensit-Anteil
   ∘ Wärmebehandlung von Blech, Draht und Stabstahl: Gezielte Steuerung der Kühlung so, dass die Umwandlung in Martensit über den Querschnitt annähernd gleichzeitig abläuft, um Planheitsdefekte und Eigenspannungen im Produkt zu minimieren.
   ∘ Wärmebehandlung von Band aus Mehrphasenstahl (z.B. Quench & Partitioning Stahl): Gezielte Steuerung des Anteils an Austenit und Martensit nach dem Abschrecken durch modellgestützte Ermittlung des Martensitanteils, u.a. als Funktion von chemischer Zusammensetzung, Temperatur-Zeit-Führung, Phasenanteile vor dem Abschrecken und der Austenitkorngröße. Auswahl einer geeigneten Temperatur des Kohlenstoff-Partitioning (Partitioning: Umverteilung von Kohlenstoff von Martensit in Austenit zur Stabilisierung des Austenits bei Raumtemperatur) durch Vermeidung der Bildung von Bainit und von Karbiden.

In allen Prozessstufen kann der Gehalt an chemischen Elementen im Werkstoffvolumen als Regelgröße genutzt werden. Diese Gehalte können sich durch Diffusionsprozesse (z.B. von C, N, B) im Halbzeug verändern, z.B. bei der (unerwünschten) Randentkohlung oder der gewünschten Effusion von Wasserstoff zur Vermeidung von Wasserstoffversprödung (Flockenrisse, verzögerter Bruch). Bei der Effusion von Wasserstoff können mit Hilfe des Basismodells und einem Submodell, welches die Gefügemengenanteile (insbes. Austenit, Ferrit und Bainit) als Funktion der Temperatur-Zeit-Führung zeigt, berechnet werden, wodurch sich unter Berücksichtigung der Diffusion von H ein optimaler Temperaturbereich bestimmen lässt, in dem die Effusiongeschwindigkeit maximal wird. Die Temperatur muss möglichst hoch sein und dicht unterhalb der Ac1-Temperatur liegen, bei der sich Austenit bildet, der eine hohe Löslichkeit für H hat und somit die Effusion behindert.

Das gleiche Prinzip "Elementgehalt als Regelgröße" gilt auch für Oberflächenhärteverfahren, bei denen chemische Elemente in die Werkstoffoberfläche eingebracht werden, z.B. bei der gezielten Aufkohlung zur gezielten Einstellung einer gewünschten Einhärtetiefe, beim Nitrieren (und der Bildung von Nitriden), beim Carbonitrieren und dem Borieren von Stählen.

### Verbesserung des Standes der Technik

Der Stand der Technik wird dadurch verbessert, dass ein thermodynamisches Basismodell Daten aus einer metallphysikalisch/thermodynamisch konsistenten Datenbasis an mehrere nachgeschaltete Submodelle liefert, die auch prozessstufenübergreifend arbeiten (Prozesskette) und zur Steuerung bzw. Regelung von Werkstoffeigenschaften und Qualitätsparametern in Kombination mit Prozessmodellen genutzt werden. Ferner werden den Prozessmodellen thermophysikalische Eigenschaften zur Verfügung gestellt, die zur Steuerung bzw. Regelung der Prozesse benötigt werden. Das Basismodell ist dadurch gekennzeichnet, dass es nach der Methode des "Compound Energy Formalism" (CEF) arbeitet, welches Phasen auch mit mehr als zwei Untergittern beschreibt. Im Allgemeinen Fall enthalten die Untergitter Bestandteile ("constituents"), zu denen chemische Elemente, Moleküle oder Ionen gehören. Deren Anteile ("site fractions") auf jeweils einem Untergitter summieren sich zu 1. Aus den "site fractions" können die Molenbrüche berechnet werden. Auch ist es dadurch gekennzeichnet, dass Phasen wie z.B. Austenit und Ferrit in Stahl (jeweils 2 Untergitter) mit sowohl substitutionellen als auch mit interstitiellen Untergittern beschrieben werden, wobei letztere die nicht besetzten Gitterlücken wie ein chemisches Element (VA, "Vacancies") behandeln. Das ermöglicht eine Modellierung der Phase über einen deutlich weiteren Bereich der chemischen Zusammensetzung, als wenn man die interstitiellen Elemente (z.B. C, N in Stahl, Gusseisen, Nickelbasislegierungen, Phasen: Austenit, Ferrit) zusammen mit den substitutionellen Elementen mit nur einem Untergitter modellieren würde. Dies ermöglicht auch die Berechnung von hochkohlenstoffhaltigen Stählen wie z.B. der Werkzeugstahl X210CrW12 (1.2436), der auch neben dem hohen Kohlenstoffgehalt Karbidtypen bildet, die nur mit mehr als 2 Untergittern sinnvoll modelliert werden können. Auch ermöglicht es die gleichzeitige Berechnung von kubisch-flächenzentrierten Karbonitriden der Elemente Nb, V, Ti, die gleichzeitig mit kubisch-raumzentriertem Ferrit aus kubischflächenzentriertem Austenit gebildet werden.

Die konsistenten Thermodynamik-Daten, die mit dem Basismodell berechnet werden, können verwendet werden, um einerseits thermophysikalische Eigenschaften zu berechnen, mit denen dann die zeitabhängige Entwicklung von Temperaturfeldern und die davon abhängige Veränderung der Geometrie in Halbzeug aus Metallen berechnet werden kann. Mit dem Basismodell werden alle Submodelle (Werkstoffmodelle) in einer Prozesskette zur Simulation der zeitlichen Entwicklung von Phasenumwandlungen und der Beeinflussung des Werkstoffgefüges mit thermodynamischen Daten versorgt. Dazu gehören z.B. die Submodelle: Thermophysikalische Eigenschaften, Berechnung der Kinetik von Phasenumwandlungen wie Erstarrung, Gussgefüge (transkristallinglobulitisch), Austenitumwandlung, Ausscheidung intermetallischer Phasen, Kornwachstum, Rekristallisation, Diffusionsausgleich chemischer Komponenten.

Beispiel Prozesskette: Stranggießen, Warmtransport von Halbzeug, Wiedererwärmung von Stahl unter Berücksichtigung der Wechselwirkung von Mikroseigerungen, (Karbonitrid-) Ausscheidung - Austenitumwandlung (z.B. Ferritbildung).

Die Berechnung von Mikroseigerungen kann z.B. mit einem Scheil-Gulliver Modell erfolgen, in dem die thermodynamischen Gleichgewichtsdaten mittels dem thermodynamischen Basismodell berechnet werden. Als Ergebnis erhält man ein Seigerungsprofil aller chemischen Elemente (Molenbruch von Element j: xⱼ) als Funktion einer charakteristischen Länge z (z.B. sekundärer Dendritenarmabstand): xⱼ(z). An jedem Punkt des berechneten Seigerungsprofils z kann die chemische Zusammensetzung xⱼ(z) verwendet werden, um mit dem gleichen Basismodell die Austenitumwandlung und Ausscheidungsprozesse (z.B. von Karbonitriden der Mikrolegierungselemente Nb, V, Ti, in Stahl oder von W in Ni-Leg., Aluminiumnitrid, Mangan-, Eisensulfid), insbesondere in interdendritischen Bereichen und an Korngrenzen, zu berechnen. Diese metallkundlichen Vorgänge können versprödend wirken und am Gussprodukt zu Rissen führen. Um diese Phasenumwandlungen zu vermeiden, kann online-dynamisch die Kühlung angepasst werden.

Beispiel Prozesskette: Warmumformung mit anschließender Kühlung: Auch die Energieänderung bei Umformprozessen (z.B. Walzen, Schmieden, Strangpressen), die eine Änderung der Versetzungsdichte im Werkstoffgefüge zur Folge hat, hat Einfluss auf Phasenumwandlungen und wird durch einen Zusatzterm der Gibbs-Energie im Basismodell berücksichtigt. Die Versorgung unterschiedlicher Submodelle über eine Prozesskette ist nur dadurch möglich, dass das vollständige Multikomponenten- und Multiphasensystem berücksichtigt wird, was nur durch die Verwendung von Phasen mit mehr als zwei Untergittern sichergestellt werden kann.

Ferner ist es mit dem gemäß der Erfindung verwendeten thermodynamischen Basismodell sogar möglich, ein Para-Gleichgewicht (PEQ, nur die interstitiellen Elemente befinden sich im thermodynamischen Gleichgewicht) als Multikomponenten- und Multiphasensystem mit mehreren interstitiellen Elementen (C, N, ...) zu berechnen. Die interstitiellen Elemente sind in der Regel sowohl an der Karbonitridbildung (insbes. Nb, Ti, V) als auch an der Austenitumwandlung beteiligt. Damit kann auch ein Gleichgewicht mit Austenit, Ferrit und Zementit, welches üblicherweise mit einem PEQ modelliert wird, berechnet werden. Dies kommt zur Anwendung in einer Warmbandkühlstrecke mit gleichzeitiger Karbonitrid-Ausscheidung, die schon im vorgelagerten Walzwerk während der Umformung begonnen hat. Ferner beeinflusst die Ausscheidung von Karbonitriden beim thermomechanischen Walzen von mikrolegierten Stählen die Versetzungsdichte und Rekristallisation im Austenit, was wiederum dessen Gibbs-Energie verändert, was wiederum einen Einfluss auf die Ferritbildung hat. Die Wechselwirkungen von Walzkraft-Umformung-Versetzungsdichte und Karbonitridausscheidung-Versetzungsdichte und Austenitumwandlung-Versetzungsdichte werden vorzugsweise iterativ berechnet. Für diese iterativen Berechnungen werden das Basismodell, die Submodelle und Prozessmodelle eingesetzt.

Die Bildung von Martensit in Stählen kann mit dem Konzept der T0-Temperatur berechnet werden. Den Gibbs-Energie Beschreibungen der Phasen, die partitionslos umwandeln, können neben den chemischen Beiträgen auch noch weitere Beiträge wie z.B. mechanische Energiebeiträge hinzugefügt werden. Die Martensitstarttemperatur, die treibende Kraft zur Martensitbildung und die Veränderungen der Enthalpie, die mit der Martensitbildung verbunden sind, werden durch das Basismodell zur Verfügung gestellt und von den Submodellen und den Prozessmodellen genutzt. So kann beispielsweise vorhergesagt werden, welchen Einfluss die Ausscheidung von Karbiden auf den Kohlenstoff-Gehalt des Austenits hat, der dann wiederum die Martensitstarttemperatur beeinflusst.

Das erfindungsgemäße Verfahren liefert z.B. für den rostfreien Stahl X6CrNiMoTi17-12-2 alle für die Prozesskette notwendigen Phasen und deren Eigenschaften, die durch diffusionskontrollierte Phasenumwandlungen in Schmelz-, Gieß-, Warmumform- und Wärmebehandlungs- und Oberflächenbehandlungsprozessen relevant sind. Das betrifft u.a. die Ausscheidung der Karbonitride (Ti)(N,C), (Nb)(C,N), des M23C6-Karbides und der Sigma-Phase. Diese Ausscheidungen sind qualitätsrelevant und können mit dem Basismodell in Kombination mit den Submodellen in Simulationen zur Steuerung der Kühlung wie z.B. in einer Stranggießanlage oder bei einer Lösungsglühung zur Vermeidung der Ausscheidung des Chrom-reichen Karbids M23C6 und der versprödenden Sigma-Phase durch online-dynamische Berechnung der Keimbildung und dem Wachstum dieser Phasen berechnet werden. Die Daten der Phasen werden thermodynamisch konsistent berechnet, auch wenn die Änderung des Zustandes einer Phase (z.B. Sigma) den Zustand der anderen Phasen (z.B. Austenit) beeinflusst.

### Anwendungsgebiete der Erfindung

Produktion von Halbzeugen aus Stahl und Nichteisenmetallen (Lang- und Flachprodukte, Schmiedeprodukte, Strangpressprofile) und von Bauteilen aus der additiven Fertigung: Definition von Prozessparametern und Steuerung des Prozesses unter Berücksichtigung der 1. Gefügebildung bei
1.1. Stahlerzeugung,
1.2. Stranggießen (Bramme, Knüppel, Vorblock, Beam-Blank, Rund, Band, Block)
1.3. Brammen-, Blech- und Langproduktadjustage
1.4. Warmwalzen (Wiedererwärmen, Vor- und Fertigwalzen, Wasser-/Luftkühlung, Warmbandhaspeln, Kühlbett,Windungskühltransport)
1.5. Kaltwalzen
1.6. Wärmebehandlung (Vergüten von Grobblech, Band aus Mehrphasenstählen in "Continuous Annealing/Galvanizing Line")
1.7. Schmieden
1.8. Regeln für den Transport (z.B. mittels Kran) von Halbzeug.
1.9. Strangpressen z.B. von Aluminiumlegierungen

### 2. Zweck der Erfindung:

2.1. Verbesserung der Qualität von Halbzeugen durch Verbesserung des Gefüges und der mechanisch-technologischen Eigenschaften zur Vermeidung von Fehlern am Halbzeug (z.B. Rissbildung) durch thermodynamisch-kinetische Modellierung des Gefüges und der entstehenden Phasen als Funktion der Prozessparameter und der chemischen Zusammensetzung (einer Schmelze und deren Streuungen):
   2.1.1. Stahlerzeugung: Berechnung thermophysikalischer Eigenschaften der Schmelze
   2.1.2. Stranggießen einschließlich Twin-Roll Casting, (Twin-) Belt Casting, Block Casting, Continuous Ingot Casting:
      2.1.2.1. Vorhersage der Rissempfindlichkeit und Vermeidung von Rissen
         - Vermeidung von Heißrissen: Vorhersage der Nullzähigkeitstemperatur, der thermischen Kontraktion der festen Phasen im rissempfindlichen Temperaturintervall
         - Vermeidung von ausscheidungsinduzierten Oberflächenrissen: (chemisch treibende Kraft der Keimbildung von Ausscheidungen auf Korngrenzen und im Korn)
         - Vermeidung von Ferritfilmen auf Korngrenzen: (chemisch treibende Kraft der Keimbildung von Ferrit auf Korngrenzen und im Korn)
         - Minimierung des Effekts von versprödenden intermetallischen Phasen (z.B. Sigma- oder Laves-Phase) in Stranggussprodukten
         - Kornfeinung (oberflächennah)
         - Kernaufreißungen oder Delaminationen durch Flüssigkeitsfilme auf Korngrenzen.
         - Oberflächenrissvermeidung bei Intensivkühlung (Oberflächentemperaturen sind im Bereich der Phasenumwandlung) für "thermische Soft-Reduction"
      2.1.2.2. Verringerung Makroseigerungen und Karbidzeiligkeit im Kern eines Gussproduktes
      2.1.2.3. Einstellung eines Gussgefüges mit definiertem Anteil globulitischen Gefüges durch Kopplung von Temperatur- und Gefügemodellierung bei der Erstarrung
      2.1.2.4. Martensitbildung und Kernaufreißungen im Kern eines Gussproduktes: Vorhersage der Martensitstarttemperatur
   2.1.3. Adjustage von Halbzeug, tertiäre Kühlung
      2.1.3.1. Vermeidung von Rissen durch Ausscheidungen auf Korngrenzen
      2.1.3.2. Vermeidung von Rissen durch Ferritfilmen auf Korngrenzen
      2.1.3.3. Vermeidung von Rissen durch Martensitbildung auf der Oberfläche
   2.1.4. Wiedererwärmung vor der Warmumformung oder der Wärmebehandlung
      2.1.4.1. Austenitisierung
      2.1.4.2. Auflösung von Ausscheidungen, damit diese in nachfolgendem Prozess gezielt und homogen ausgeschieden werden können (z.B. thermomechanisches Walzen mikrolegierter Stähle).
      2.1.4.3. Beeinflussung der Randentkohlung
      2.1.4.4. Beeinflussung von Kornwachstum durch Ausscheidungen
   2.1.5. Warmwalzen, Schmieden und Strangpressen
      Vorhersage von Phasenumwandlungen durch Berücksichtigung von Umformenergie im Metallvolumen:
      2.1.5.1. Festlegung Endwalztemperatur beim thermomechanischen Walzen von mikrolegiertem Stahl mit nicht-rekristallisiertem Gefüge im letzten Stich: Vorhersage der A3-Temperatur (Bildung von Ferrit aus Austenit im Gleichgewicht) unter Berücksichtigung der Umformenergie (Umformgrades, Versetzungsdichte)
      2.1.5.2. Ausscheidung (auch deformationsinduziert) und die Beeinflussung der Fließspannung/Rekristallisation/Kornwachstum
      2.1.5.3. Laminarkühlung von Warmband: Kinetik der Gefügebildung bei der Austenitumwandlung (Keimbildung und Wachstum von Ferrit, Zementit, Bainit, Martensit)
   2.1.6. Wärmebehandlung Grobblech
      2.1.6.1. Einstellung eines homogenen martensitischen Gefüges über die gesamte Dicke durch geeignete Temperaturführung unter Berücksichtigung der Martensitstarttemperatur, die dickenabhängig durch die Ausscheidung von Karbiden beeinflusst wird.
      2.1.6.2. Bestimmung der Curie-Temperatur zur Festlegung des Transportes durch Magnetkrane.
      2.1.6.3. Steuerung der Abkühlkühlung von Blechen und Brammen zur Maximierung der Wasserstoffeffusionsgeschwindigkeit.
   2.1.7. Wärmebehandlung Bandanlagen (kontinuierlich, Flachprodukte inkl. Schmelztauchveredelung): Mehrphasenstähle, Festlegung der Temperatur beim interkritischen Glühen, Berechnung des Austenitanteils vor dem beschleunigten Kühlen von Mehrphasenstählen (Mehrphasenstähle wie Dualphasen-, TRIP-, Quench & Partitioning Stahl)
   2.1.8. Wärmebehandlung (Coil in Haubenglühe): kontrollierte Ausscheidung zur Steuerung der Rekristallisation zur Einstellung des "Pancake-Gefüges" von Tiefziehstählen.
   2.1.9. Wärmebehandlung von Langprodukten (Träger, Stabstahl, Draht, nahtlose Rohre), Schmiedeteilen und Ringen Vergüten (Härten und Anlassen): Kinetik der Gefügebildung bei der Austenitumwandlung (Keimbildung und Wachstum von Ferrit, Zementit, Bainit, Martensit), Randentkohlung, Aufkohlung, Weichglühen (GKZ-Glühen), Diffusionsglühen (z.B. Kugellagerstähle), Wasserstoff-Effusionsglühen (Flockenfrei-Glühung), ...
2.2. Erhöhung der Genauigkeit von numerischen Temperaturfeldberechnungen mit und ohne Umformung durch:
   2.2.1. Berücksichtigung des Enthalpiebeitrages von komplex zusammengesetzten Phasen (z.B. Sigma-Phase in rostfreien Stählen),
   2.2.2. Verbesserte Berechnung der Dichte und des thermischen Ausdehnungskoeffizienten durch Berücksichtigung komplex zusammengesetzter Phasen.

Nachfolgend wird die Erfindung anhand einiger in den beigefügten Figuren dargestellten Ausführungsbeispiele näher erläutert. Es zeigen:
Fig. 1 eine beispielshafte Aufstellung von Modellen zur Verwendung im Rahmen des erfindungsgemäßen Verfahrens zur Planung und/oder Steuerung und/oder Regelung eines Herstellungsprozesses in einer metallurgischen Produktionsanlage mit mehreren aufeinanderfolgenden Prozessschritten,
Fig. 2 eine beispielhafte Kopplung von Modellen im Rahmen des erfindungsgemäßen Verfahrens zur Berechnung einer Fließspannung und Walzkraft unter Berücksichtigung der Austenitumwandlung,
Fig. 3 eine beispielhafte Nutzung von Modellen im Rahmen des erfindungsgemäßen Verfahrens entlang der Prozesskette eines Herstellungsprozesses in einer metallurgischen Produktionsanlage,
Fig. 4 eine schematische Darstellung von Temperaturbereichen, in denen Werkstoff-SubModelle zur Anwendung kommen,

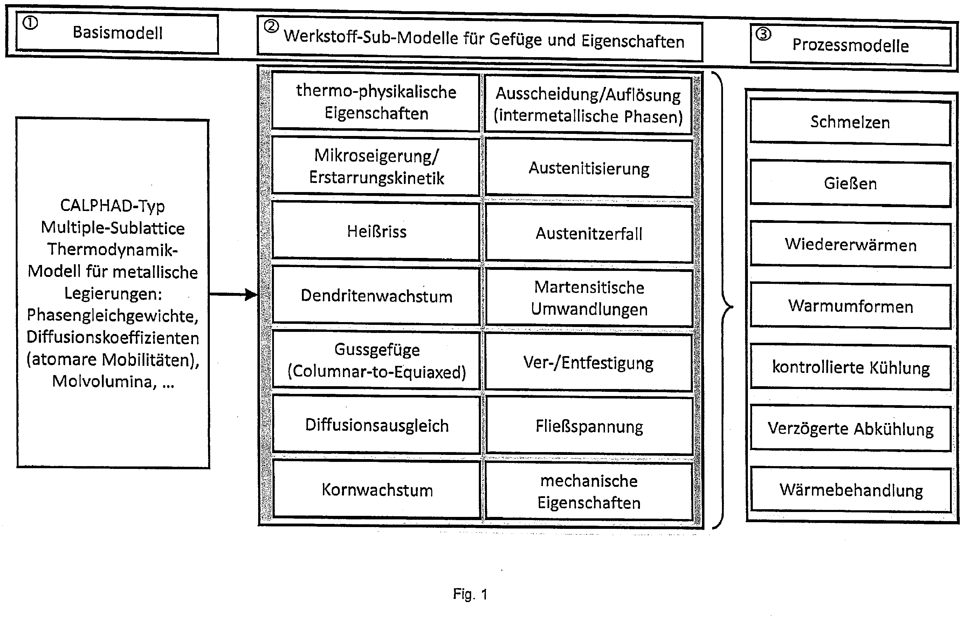

Fig. 1 zeigt eine beispielhafte Aufstellung von Modellen zur Verwendung im Rahmen des erfindungsgemäßen Verfahrens zur Planung und/oder Steuerung und/oder Regelung eines Herstellungsprozesses in einer metallurgischen Produktionsanlage mit mehreren aufeinanderfolgenden Prozessschritten.

Die Grundlage für das erfindungsgemäße Verfahren ist das Basismodell 1 zur Abbildung des Materialverhaltens in der Metallherstellung und -verarbeitung, insbesondere von Metallen oder metallischen Legierungen. Das Basismodell 1 greift für Eigenschaftsbeschreibungen dieser Materialien auf die Anwendung der CALPHAD-Methode (Calculation of Phase Diagrams) zurück, wobei die CALPHAD-Methode Phasen mit mehreren Untergittern modelliert und dadurch thermodynamische Eigenschaften, thermophysikalische Eigenschaften und/oder davon abgeleitete Eigenschaften von metallischen Legierungen aus dem Herstellungsprozess in der metallurgischen Anlage beschreibt. Insbesondere umfasst das Basismodell 1 alle für den Herstellungsprozess, insbesondere der Prozessschritte des Herstellungsprozesses, notwendigen Phasen und deren Eigenschaften, die durch, insbesondere diffusionskontrollierte, Phasenumwandlungen oder Diffusionsprozesse in Gieß-, Warmumform-, Kaltumform- und/oder Wärmebehandlungsprozessen relevant sind.

Vorzugsweise betrifft das Basismodell 1 die thermodynamische Beschreibung von Phasen mit mehreren Untergittern in metallischen Legierungen, Schlacken, Gasen und/oder lonenkristallen mit elektrisch geladenen Bestandteilen oder ionischen Schmelzen. Zweckmäßigerweise umfasst das Basismodell 1 zwei Untergitter, wovon ein Untergitter die interstitiellen Bestandteile ("constituents", z.B. chemische Elemente) mit Gitterlücken ("Vacancies") und das andere Untergitter die substitionell gelösten Bestandteile enthält.

Beispielsweise beschreibt das Basismodell 1 eine oder mehrere der folgenden thermodynamischen Eigenschaften, thermophysikalischen Eigenschaften und/oder davon abgeleiteten Eigenschaften im thermodynamischen Gleichgewicht, in metastabilen oder partiellen Gleichgewichten: chemische Potentiale, Gibbs-Energien von Phasen, Phasenzusammensetzungen, Phasenanteile, Enthalpie, Wärmekapazität, Dichte, thermische Ausdehnungskoeffizienten, Molvolumen, Viskosität, Wärmeleitfähigkeit, elektrische Leitfähigkeit, magnetische Eigenschaften, Temperaturen von Phasenumwandlungen wie Liquidus-Temperatur oder Solidus-Temperatur, atomare Mobilitäten und Diffusionskoeffizienten und/oder Grenzflächenenergien zwischen Phasen.

Auf das Basismodell 1 greifen ein oder mehrere Submodelle 2 zu, welche die Daten des erstellten Basismodells 1 erhalten und weiterverarbeiten, wobei die Submodelle 2 Gefüge oder Werkstoffeigenschaften aus dem Herstellungsprozess in der metallurgischen Anlage beschreiben. Die Submodelle 2 simulieren zumindest teilweise die Kinetik von Phasenumwandlungen und/oder berechnen thermodynamische Eigenschaften, die von Phasenanteilen und der chemischen Zusammensetzung von Phasen bestimmt werden.

Das wenigstens eine Submodell 2 beschreibt eines der folgenden Gefüge oder eine der folgenden Eigenschaften abweichend vom thermodynamischen Gleichgewicht: thermophysikalische Eigenschaften, Ausscheidung/Auflösung, insbesondere von intermetallischen Phasen, Mikroseigerung/Erstarrungskinetik, Austenitisierung, Fehlstellenbildung (Heißrisse, Lunker, Poren, Leerstellen, Versetzungen), Austenitzerfall, Dendritenwachstum, martensitische Umwandlungen, Gussgefüge (Columnar-to-Equiaxed Transition), Ver-/Entfestigung (Erholung, Rekristallisation), Ausgleich von Unterschieden von Konzentrationen und chemischen Potentialen (Diffusion, Wasserstoffeffusion), Fließspannung, Kornwachstum, Ausbildung kristallografischer Texturen (z.B. Goss-Textur in kornorientiertem Silizium-Stahl), mechanische Eigenschaften und/oder magnetische Eigenschaften wie z.B. die Curie-Temperatur. Insbesondere werden mehrere Submodelle 2 erstellt, welche jeweils die Informationen des erstellten Basismodells 1 erhalten und weiterverarbeiten, wobei jedes Submodell 2 Gefüge oder Werkstoffeigenschaften aus dem Herstellungsprozess in der metallurgischen Anlage beschreibt.

Zweckmäßigerweise kann ein Datenaustausch zwischen dem Basismodell 1 und den Submodellen 2 erfolgen, oder aber unter den Submodellen 2 untereinander.

Ferner basiert das erfindungsgemäße Verfahren auf Prozessmodellen 3 für die mehreren aufeinanderfolgenden Prozessschritte des Herstellungsprozesses in der metallurgischen Produktionsanlage, wobei die erstellten Prozessmodelle 3 den Herstellungsprozess des jeweiligen Prozessschrittes auf Basis eines oder mehrerer der erstellten Submodelle 2 optimieren. Zur Optimierung eines zugeordneten Prozessschrittes des Herstellungsprozesses bestimmt das zugehörige Prozessmodell 3 beispielsweise Regelgrößen und/oder Stellgrößen für die Automation des Herstellungsprozesses.

Die Regelgrößen sind insbesondere ausgewählt aus: Viskosität der Schmelze, Phasenanteil, insbesondere Festphasenanteil und Schmelzeanteil, Daten zu Ausscheidungen (insbesondere deren Typ, Volumenanteil, mittlere Größe und/oder Verteilungsfunktion der Größe der Ausscheidungen, Zener-Pinning-Force), mittlere Korngrößen und/oder Verteilungsfunktion der Korngrößen, Gefügemengenanteile (z.B. Bainit, Perlit), Versetzungsdichte, mechanische Eigenschaften, Umformvermögen, Umformfestigkeit, Cottrell-Wolken, Homogenisierungsgrad, Überhitzung der Schmelze bei Gießstart bis Gießende, Position der Durcherstarrung, Strangschalendicke, Strangoberflächentemperaturen, Position der vorgegebenen Phasenteile, Ziehtemperatur, Geometrie und Abmessungen vom Halbzeug/Endprodukt (z.B. additiv gefertigt, geschmiedet, ...), Endwalztemperatur, Gefüge vor der Umformung, Ziehtemperatur aus dem Wiedererwärmungsprozess, Massenstrom, Walzgeschwindigkeit und/oder Haspeltemperatur.

Die Stellgrößen betreffen vorzugsweise Prozessparameter wie Temperatur, Zeit, Geschwindigkeit, Druck, Kraft, Volumenströme und dergleichen und sind insbesondere ausgesucht aus: Abstichtemperatur der Schmelze, Heizleistung, Kühlschrott, Spüldauer, Gießgeschwindigkeit, Wassermengen und Luftdruck der Sekundärkühlung, Temperatur und Verweilzeit in Heizzonen, Einsatztemperatur und/oder Umformgrad,

Zweckmäßigerweise kann ein Datenaustausch zwischen den Prozessmodellen 3, den Submodellen 2 und/oder dem Basismodell 1 erfolgen. Somit können dem Basismodell 1 beispielsweise zusätzlich zu der chemischen Zusammensetzung und der Temperatur auch Berechnungsergebnisse der Submodelle 2 und der Prozessmodelle 3 übergeben werden, so dass die Ergebnisse des Basismodells 1 präzisiert und wieder an die Submodelle 2 übergeben werden, um eine iterative Berechnung auszuführen.

Das erfindungsgemäße Verfahren optimiert den Herstellungsprozess in der metallurgischen Anlage mit den mehreren aufeinanderfolgenden Prozessschritten unter Berücksichtigung der erstellten Prozessmodelle 3 und globalen und/oder lokalen Optimierungszielen. Die globalen Optimierungsziele betreffen beispielsweise den gesamten Herstellungsprozess in der metallurgischen Produktionsanlage und die lokalen Optimierungsziele betreffen z.B. einen oder mehrere der Prozessschritte des Herstellungsprozesses in der metallurgischen Produktionsanlage.

Die Optimierungsziele sind zweckmäßigerweise ausgewählt aus einer Gruppe von Merkmalen gebildet aus: Produktqualität, Produktfehler, chemische Produktzusammensetzung, Energieverbrauch, Produktionsrate, Maschinenauslastung, Maschinenabnutzung und/oder Produktionszeit.

Insbesondere stellt das Prozessmodell 3 Informationen zur Temperaturführung, zum Massenfluss und/oder zur Umformung bereit, um den Herstellungsprozess zu optimieren.

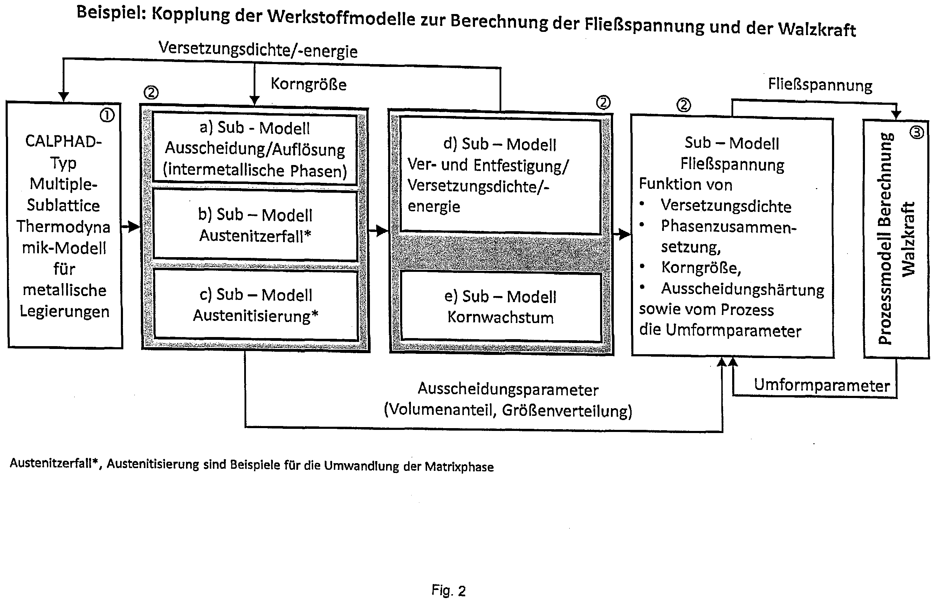

Fig. 2 zeigt eine beispielhafte Kopplung von Modellen im Rahmen des erfindungsgemäßen Verfahrens zur Berechnung einer Fließspannung und Walzkraft unter Berücksichtigung der Ver- und Entfestigung und von Phasenumwandlungen (Austenitumwandlung, Ausscheidungsbildung). Die Modelle beeinflussen sich gegenseitig: Das Basismodell 1 liefert Informationen zu den Werkstoff-Sub-Modellen a)-e), von denen das Basismodell wiederum Informationen zur Versetzungsdichte/-energie erhält, womit das Basismodell verbesserte Informationen zu den Phasenumwandlungen bereitstellt (iterative Berechnung). Mit diesen iterativ berechneten Daten der Phasenumwandlungen wird die Fließspannung berechnet, die vom Prozessmodell 3 zur Berechnung der Walzkraft verwendet wird. Das Prozessmodell berechnet unter anderem die Temperatur und die Umformung.

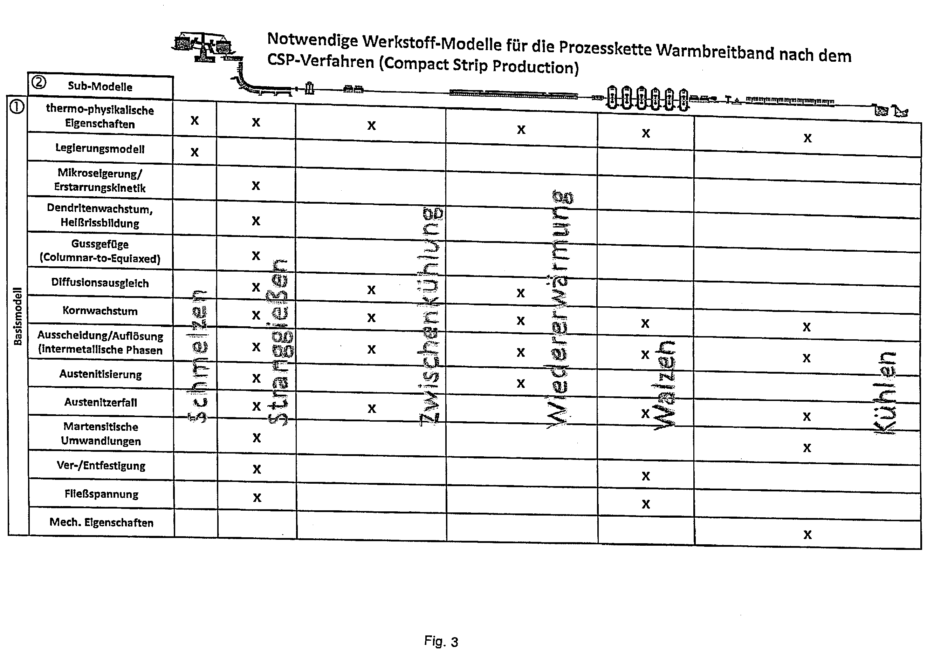

Fig. 3 zeigt eine beispielhafte Nutzung von Modellen im Rahmen des erfindungsgemäßen Verfahrens entlang der Prozesskette eines Herstellungsprozesses in einer metallurgischen Produktionsanlage. Insbesondere zeigt Fig. 3 die Nutzung von unterschiedlichen Submodellen 2 durch die aufeinanderfolgenden Prozessschritte Schmelzen, Stranggießen, Zwischenkühlung, Wiedererwärmung, Walzen und Kühlen bei der Prozesskette Warmbreitband nach dem CSP-Verfahren (Compact Strip Production).

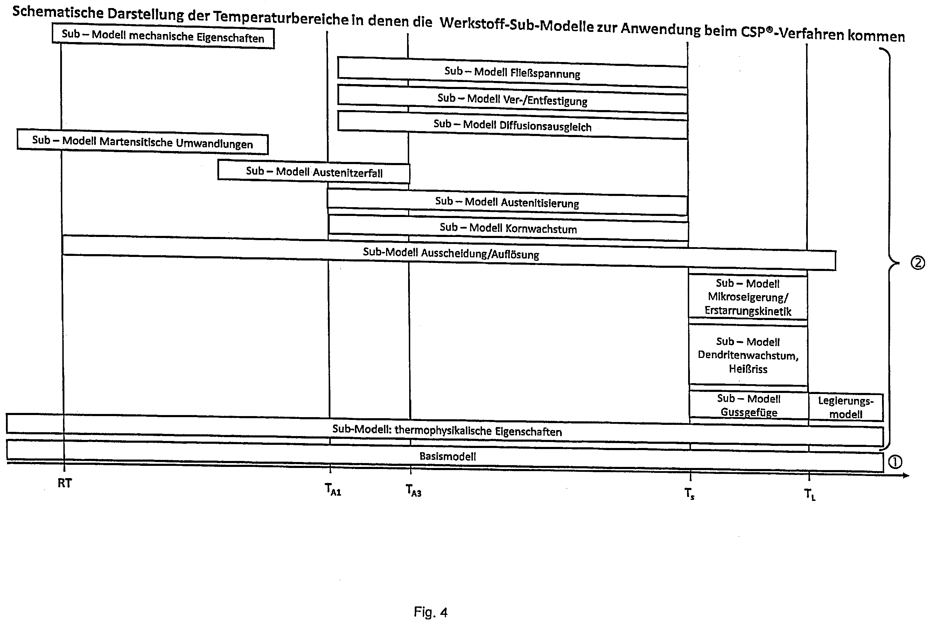

Fig. 4 zeigt eine schematische Darstellung von Temperaturbereichen bei der Prozesskette Warmband für Stahl von der Schmelze bis zur Coilabkühlung, in denen Werkstoff-SubModelle 2 zur Anwendung kommen (RT: Raumtemperatur, T_{A1}: Gleichgewichts-Austenitbildungstemperatur beim Erwärmen, T_{A3}: Gleichgewichtstemperatur der Ferritbildung beim Abkühlen, Ts: Solidus-Temperatur der Erstarrung, T_{L}: Liquidus-Temperatur der Erstarrung).

### Bezugszeichenliste

- 1: Basismodell
- 2: Submodelle
- 3: Prozessmodelle

## Patentansprüche

1. Verfahren zur Planung und/oder Steuerung und/oder Regelung eines Herstellungsprozesses in einer metallurgischen Produktionsanlage mit mehreren aufeinanderfolgenden Prozessschritten, umfassend die Schritte:
Erstellen eines Basismodells (1) zur Abbildung des Materialverhaltens in der Metallherstellung und -verarbeitung, insbesondere von Metallen oder metallischen Legierungen, wobei das Basismodell (1) für Eigenschaftsbeschreibungen dieser Materialien auf die Anwendung der CALPHAD-Methode (Calculation of Phase Diagrams) zurückgreift, wobei die CALPHAD-Methode Phasen mit mehreren Untergittern modelliert und dadurch thermodynamische Eigenschaften, thermophysikalische Eigenschaften und/oder davon abgeleitete Eigenschaften von metallischen Legierungen aus dem Herstellungsprozess in der metallurgischen Anlage beschreibt,
Erstellen von wenigstens einem Submodell (2), welches die Informationen des erstellten Basismodells (1) erhält und weiterverarbeitet, wobei das Submodell (2) Gefüge oder Werkstoffeigenschaften aus dem Herstellungsprozess in der metallurgischen Anlage beschreibt,
Erstellen von Prozessmodellen (3) für die mehreren aufeinanderfolgenden Prozessschritte des Herstellungsprozesses in der metallurgischen Produktionsanlage, wobei die erstellten Prozessmodelle (3) den Herstellungsprozess des jeweiligen Prozessschrittes auf Basis eines oder mehrerer der erstellten Submodelle (2) optimiert, und
Optimieren des Herstellungsprozesses in der metallurgischen Anlage mit den mehreren aufeinanderfolgenden Prozessschritten unter Berücksichtigung der erstellten Prozessmodelle (3) und globalen und/oder lokalen Optimierungszielen.

2. Verfahren nach Anspruch 1, wobei das Basismodell (1) die thermodynamische Beschreibung von Phasen mit mehreren Untergittern in metallischen Legierungen, Schlacken, Gasen und/oder lonenkristallen mit elektrisch geladenen Bestandteilen oder ionischen Schmelzen beschreibt.

3. Verfahren nach Anspruch 1 oder 2, wobei das Basismodell (1) eine oder mehrere der folgenden thermodynamischen Eigenschaften, thermophysikalischen Eigenschaften und/oder davon abgeleiteten Eigenschaften im thermodynamischen Gleichgewicht, in metastabilen oder partiellen Gleichgewichten beschreibt: chemische Potentiale, Gibbs-Energien von Phasen, Phasenzusammensetzungen, Phasenanteile, Enthalpie, Wärmekapazität, Dichte, thermische Ausdehnungskoeffizienten, Molvolumen, Viskosität, Wärmeleitfähigkeit, elektrische Leitfähigkeit, magnetische Eigenschaften, Temperaturen von Phasenumwandlungen wie Liquidus-Temperatur oder Solidus-Temperatur, atomare Mobilitäten und Diffusionskoeffizienten und/oder Grenzflächenenergien zwischen Phasen.

4. Verfahren nach einem der Ansprüche 1 bis 3, wobei das Basismodell (1) alle für den Herstellungsprozess, insbesondere der Prozessschritte des Herstellungsprozesses, notwendigen Phasen und deren Eigenschaften, die durch, insbesondere diffusionskontrollierte, Phasenumwandlungen oder Diffusionsprozesse in Gieß-, Warmumform-, Kaltumform- und/oder Wärmebehandlungsprozessen relevant sind, umfasst.

5. Verfahren nach einem der Ansprüche 1 bis 4, wobei mindestens ein Submodell (2) die Kinetik von Phasenumwandlungen simuliert und/oder thermodynamische Eigenschaften berechnet, die von Phasenanteilen und der chemischen Zusammensetzung von Phasen bestimmt werden.

6. Verfahren nach einem der Ansprüche 1 bis 5, wobei das wenigstens eine Submodell (2) eines der folgenden Gefüge oder eine der folgenden Eigenschaften abweichend vom thermodynamischen Gleichgewicht beschreibt: thermophysikalische Eigenschaften, Ausscheidung/Auflösung, insbesondere von intermetallischen, Phasen, Mikroseigerung/Erstarrungskinetik, Austenitisierung, Fehlstellenbildung (Heißrisse, Lunker, Poren, Leerstellen, Versetzungen), Austenitzerfall, Dendritenwachstum, martensitische Umwandlungen, Gussgefüge (Columnar-to-Equiaxed Transition), Ver- und Entfestigung (Erholung, Rekristallisation), Ausgleich von Unterschieden von Konzentrationen und chemischen Potentialen (Diffusion, Wasserstoffeffusion), Fließspannung, Kornwachstum, Ausbildung kristallografischer Texturen (z.B. Goss-Textur in kornorientiertem Silizium-Stahl), mechanische Eigenschaften und/oder magnetische Eigenschaften wie z.B. die Curie-Temperatur.

7. Verfahren nach einem der Ansprüche 1 bis 6, wobei ein Datenaustausch zwischen dem Basismodell (1), den mehreren Submodellen (2) und/oder den mehreren Prozessmodellen (3) erfolgt.

8. Verfahren nach einem der Ansprüche 1 bis 7, wobei ein oder mehrere Prozessmodelle (3) zur Optimierung eines zugeordneten Prozessschrittes des Herstellungsprozesses jeweils Regelgrößen und/oder Stellgrößen für die Automation des Herstellungsprozesses bestimmen.

9. Verfahren nach Anspruch 8, wobei die Regelgrößen ausgewählt sind aus: Viskosität der Schmelze, Phasenanteil, insbesondere Festphasenanteil und Schmelzeanteil, Daten zu Ausscheidungen (insbesondere deren Typ, Volumenanteil, mittlere Größe und/oder Verteilungsfunktion der Größe der Ausscheidungen, Zener-Pinning-Force), mittlere Korngrößen und/oder Verteilungsfunktion der Korngrößen, Gefügemengenanteile (z.B. Bainit, Perlit), Versetzungsdichte, mechanische Eigenschaften, Umformvermögen, Umformfestigkeit, Cottrell-Wolken, Homogenisierungsgrad, Überhitzung der Schmelze bei Gießstart bis Gießende, Position der Durcherstarrung, Strangschalendicke, Strangoberflächentemperaturen, Position der vorgegebenen Phasenteile, Ziehtemperatur, Geometrie und Abmessungen vom Halbzeug/Endprodukt (z.B. additiv gefertigt, geschmiedet, ...), Endwalztemperatur, Gefüge vor der Umformung, Ziehtemperatur aus dem Wiedererwärmungsprozess, Massenstrom, Walzgeschwindigkeit und/oder Haspeltemperatur.

10. Verfahren nach Anspruch 8 oder 9, wobei die Stellgrößen Prozessparameter wie Temperatur, Zeit, Geschwindigkeit, Druck, Kraft, Volumenströme und dergleichen betreffen und insbesondere ausgesucht sind aus: Abstichtemperatur der Schmelze, Heizleistung, Kühlschrott, Spüldauer, Gießgeschwindigkeit, Wassermengen und Luftdruck der Sekundärkühlung, Temperatur und Verweilzeit in Heizzonen, Einsatztemperatur und/oder Umformgrad.

11. Verfahren nach einem der Ansprüche 1 bis 10, wobei die mehreren aufeinanderfolgenden Prozessschritte des Herstellungsprozesses ausgewählt sind aus einer Gruppe von Merkmalen gebildet aus: Schmelzen und Legieren, Stranggießen, Blockgießen, Adjustage, Wiedererwärmung, Warmwalzen, Kaltwalzen, Wärmebehandlung, Oberflächenbeschichtung, Oberflächenhärten, Schmieden, Strangpressen, additive Fertigung und/oder Transport.

12. Verfahren nach einem der Ansprüche 1 bis 11, wobei die globalen Optimierungsziele den gesamten Herstellungsprozess in der metallurgischen Produktionsanlage betreffen.

13. Verfahren nach einem der Ansprüche 1 bis 12, wobei die lokalen Optimierungsziele einen oder mehrere der Prozessschritte des Herstellungsprozesses in der metallurgischen Produktionsanlage betreffen.

14. Verfahren nach Anspruch 12 oder 13, wobei die Optimierungsziele ausgewählt sind aus einer Gruppe von Merkmalen gebildet aus: Produktqualität, Produktfehler, chemische Produktzusammensetzung, Energieverbrauch, Produktionsrate, Maschinenauslastung, Maschinenabnutzung und/oder Produktionszeit.

15. Verfahren nach einem der Ansprüche 1 bis 14, wobei mehrere Submodelle (2) erstellt werden, welche jeweils die Informationen des erstellten Basismodells (1) erhalten und weiterverarbeiten, wobei jedes Submodell (2) Gefüge oder Werkstoffeigenschaften aus dem Herstellungsprozess in der metallurgischen Anlage beschreibt.

16. Verfahren nach einem der Ansprüche 1 bis 15, wobei das Prozessmodell (3) Informationen zur Temperaturführung, zum Massenfluss und/oder zur Umformung bereitstellt, um den Herstellungsprozess zu optimieren.

17. Verfahren nach einem der Ansprüche 1 bis 16, wobei dem Basismodell (1) zusätzlich zu der chemischen Zusammensetzung und der Temperatur auch Berechnungsergebnisse der Submodelle (2) und der Prozessmodelle (3) übergeben werden, so dass die Ergebnisse des Basismodells (1) präzisiert und wieder an die Submodelle (2) übergeben werden, um eine iterative Berechnung auszuführen.

18. Verfahren nach einem der Ansprüche 1 bis 17, wobei das Basismodell (1) zwei oder mehr Untergitter umfasst, wovon ein Untergitter die interstitiellen Bestandteile mit Gitterlücken und das andere Untergitter die substitionell gelösten Bestandteile enthält.
